(19) Europäisches Patentamt
European Patent Office
Office européen des brevets

(11) EP 1 920 027 B1

(12) EUROPEAN PATENT SPECIFICATION

(45) Date of publication and mention of the grant of the patent:
**07.04.2010 Bulletin 2010/14**

(21) Application number: **06780771.9**

(22) Date of filing: **28.06.2006**

(51) Int Cl.:
***C09K 19/56*** *(2006.01)*

(86) International application number:
**PCT/JP2006/313344**

(87) International publication number:
**WO 2007/001085 (04.01.2007 Gazette 2007/01)**

# (54) LIQUID CRYSTAL DISPLAY DEVICE

FLÜSSIGKRISTALLANZEIGEVORRICHTUNG

AFFICHEUR A CRISTAUX LIQUIDES

(84) Designated Contracting States:
**DE FR GB NL**

(30) Priority: **29.06.2005 US 168925**

(43) Date of publication of application:
**14.05.2008 Bulletin 2008/20**

(73) Proprietor: **Nano Loa, Inc.**
**Kawasaki-shi,**
**Kanagawa 2130012 (JP)**

(72) Inventors:
- **MOCHIZUKI, Akihiro**
  **80027 (US)**
- **TAKENAMI, Shigeharu**
  **1710032 (JP)**

(74) Representative: **Becker Kurig Straus et al**
**Patentanwälte**
**Bavariastrasse 7**
**80336 München (DE)**

(56) References cited:
**EP-A- 1 336 636**
**GB-A- 1 376 115**
**US-A- 3 871 904**
**US-A- 3 979 320**
**US-A- 5 032 009**
**US-A1- 2003 076 468**
**US-A1- 2004 031 950**
**US-A1- 2004 105 066**
**US-A1- 2004 196 428**
**US-B1- 6 727 968**

- **YUE ZHAO ET AL: "USE OF A GELATOR IN A FERROELECTRIC LIQUID CRYSTAL: PITCH COMPENSATION AND NANOFIBRES" LIQUID CRYSTALS, TAYLOR AND FRANCIS, ABINGDON, GB, vol. 1, no. 30, January 2003 (2003-01), pages 81-86, XP001141612 ISSN: 0267-8292**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 920 027 B1

## Description

Technical Field

The present invention relates to a liquid crystal display device, which is particularly suitable for a display device for full motion video image, employing a Polarization Shielded Smectic (hereinafter, referred to as "PSS") liquid Crystal or a PSS liquid crystal material.

Background Art

Recent increase in application field of liquid crystal displays (LCDs) shows many varieties such as the advanced cell phone displays, net personal digital assistance (PDA), computer monitors, and large screen direct view TVs. These emergent increases in application field are based on recent LCDs improvement in their performance and in their manufacturability.

On the other hand, new flat panel display technologies such as Organic Light Emission Displays (OLEDs), Plasma Display Panels (PDPs) have been accelerated in their development and manufacturing to compete with LCDs. Moreover, introduction to new application field of LCDs requests new and higher performance to meet with these new application fields. In particular, most of recent emergent application fields require full-color motion video image, which is still difficult to conventional LCD technology in terms of slow response nature of conventional LCDs and their narrow viewing angle in nature.

Under the above given circumstances, LCDs are being required higher performance, in particular faster optical response in order to expand their application field competing with new flat panel display technologies which all have faster optical response performance than current LCD technologies. Followings are detail descriptions of concrete requirement at each particular application field to new LCD technologies.

(Technical problems of current LCD technologies in each application field)

(Advanced cell phone application and related applications)

Thanks to recent infrastructure improvement in broad band system availability, in some countries such as Korea, Japan and Norway already have commercial service of broad band to cell phones. This dramatic increase of transmittance capacity enables cell phone to treat full-color motion video image. Moreover in conjunction with wide spread of image capturing devices, such as Charge Coupling Devices (CCDs), Complimentary Metal Oxide Semiconductor Sensors (CMOS Sensors), the latest cell phones in above countries are changing from "talking" device to "watching" devices very rapidly. This "watching" function of the advanced cell phone is not limited in full motion video image, but also for internet browsing which is required much higher resolution to the cell phone displays.

For this particular demand, conventional LCDs based on Thin Film Transistor (TFT) technology (hereinafter, TFT-LCDs) has proven its performance of full motion video image capability in relatively large size panel displays such as over 6 inch diagonal screen size. Emergent competition with OLEDs in this particular application field, one of the advantages of LCD technology general is its high balance between brightness of screen and image retention and life time.

For all of display technologies, more or less, this relationship between screen brightness and image retention, life time is always tradeoff. Due to emissive nature of phosphor in OLEDs, this tradeoff is much severe than that of LCDs. One of the beautiful points of conventional TFT-LCDs is its free relationship between screen brightness and life time of LCD itself. Because conventional LCDs are all light switching devices and non-emissive devices, so that LCDs are free from this tradeoff. Current TFT-LCDs life time is most decided by backlight itself. Therefore, for cell phone, Net PDA, those are required in outdoor use; prefer to use longer life brighter displays that are LCD base displays.

Current TFT-LCDs technical problem to meet with those advanced display application required full color motion video image is its poor resolution at small display screen size as well as its slow optical response, which is a critical requirement for "watching" cell phone and other carrying devices. In general, the minimum required resolution for natural TV screen image needs Quarter Video Graphic Array (QVGA: $320 \times 240$ pixels) at least. Based on conventional TFT-LCD technology using Red, Green and Blue (RGB) micro color filter (see following description and Fig. 1.) on sub-pixel, actual required number of pixel element is $(240 \times 3) \times 320$ pixels. In current commercially available displays for the advanced cell phone limited screen size of 2 inches diagonal have up to Quarter Video Graphic Array Format (QVGA: $(240x3) \times 320$ pixels), which is not enough to show TV image on the screen. In particular, a portrait screen use at cell phones and Net PDAs, pixel arrangement resolution is more complicated than that for other applications using as a landscape screen use.

Fig. 1 presents current RGB sub-pixel structure in TFT-LCDs. Each micro color filter on each sub-pixel works as one of primary color element at the TFT-LCD. Due to very fine pitch pattern of these physically separated primary

color elements, human eye recognizes mixed color image. Each sub-pixel switches light from backlight to pass through its own primary color. Spatially divided primary color is required to keep rectangular sub-pixel shape to keep square image by RGB sub-pixel combination. The following Table 1 shows both sub-pixel and pixel pitches depending on screen diagonal size with QVGA resolution.

Table. 1. Sub pixel pitch depending on screen size at QVGA resolution

| Screen diagonal size (inch) | Sub-pixel pitch (μm) | Pixel Pitch (μm) |
|---|---|---|
| 10 | 211.7 | 635 |
| 5 | 95.4 | 286 |
| 2.5 | 52.9 | 159 |
| 1.25 | 26.4 | 79.3 |

This table clearly presents that 10 inches diagonal screen size with QVGA resolution provides enough design width in TFT array substrate, however, 2.5 inches diagonal screen with QVGA has only 53 μμm pitch, which is not enough compared to conventional design rule of 4 μm of TFT array.

This extremely tight design width provides two major problems. One is reduction of aperture ratio; the other is mfg yield reduction due to tight mask alignment registration. Aperture ratio reduction is a critical problem for cell phone, Net PDA those are driven by battery. Smaller aperture ratio means less efficiency of backlight throughput.

In conclusion, advanced cell phone displays and Net PDA applications those are required small screen size with higher resolution as well as fast enough full motion video image without sacrificing power consumption, need higher resolution keeping with high enough aperture ratio in addition to fast enough optical response for higher quality full motion video image reproductivity.

(Large screen direct view LCD TV application)

It is now well known that flat panel display technologies such as LCDs and PDPs are rapidly cutting into home use large screen TV market, which used to be dominated by Cathode Ray Tube (CRT) technology both in direct view and projection display. In general, one of the advantages of TFT-LCDs compared to PDPs for this particular application field is its higher resolution and its fine image quality. Due to this advantage, TFT-LCD base TVs are now developing their market share at the CRT dominated screen size market, which is between 20 inches to 36 inches diagonal. On the other hand, PDPs which has some difficulty in fine pitch pixel patterning, but has advantages in manufacturing for larger panel size than that of TFT-LCDs are focusing on industrial use of over 60 inches diagonal screen TVs.

TFT-LCDs have already established large market in computer monitor screen both for laptop and desk top computers such as 12 inches to 20 inches diagonal. Image performance required in computer monitor and TV is very different, though. Screen brightness required to computer monitor displays is limited such as 150 cd/m2 or less due to its use in close eye distance. Text oriented display image content of computer monitor displays allows substantial 32 to 64 gray shades color reproduction, instead of 256 gray shades or more gray shades for full color motion video image reproduction.

For large screen direct view TV applications, in particularly over 20 inched diagonal TV screens, screen brightness, contrast ratio, full-color gray shades, and viewing angle are very important to provide good enough image quality as TV image. In particular, larger screen TVs such as over 30 inches diagonal, its image quality is expected much like cinema image quality which is extremely important to have deeper gray shades such as 512 gray shades or more without showing image blur. Required resolution for direct view TVs are such as VGA (640 × 480 pixels) for National Television Standard Code (NTSC), higher resolution for Wide Extended Graphic Array (WXGA: 1,280 × 768 pixels), and full standard for high definition TV (HDTV: 1,920 × 1,080 pixels). In large screen.direct view TV applications, there is very distinct difference with small high resolution display application. This difference is based on screen image velocity issue.

When two screen images are compared between 20 inches and 40 inches diagonal both have WXGA resolution, screen diagonal distance of 20 inches is half of that of 40 inches. However, screen frame frequency as TV image is same between 20 and 40 inches screen. This provides image velocity difference as shown in Fig. 2. The screen image velocity is simply in proportion to diagonal size. When total resolution is the same like WXGA, pixel element size of 40 inches diagonal screen has four times larger than that of 20 inches diagonal screen. Larger pixel is more perceptible than smaller pixel size. In particular, relatively slow optical response of conventional TFT-LCDs is much more perceptible in larger pixel size, which is larger screen size. This requests faster optical response at each pixel element in larger diagonal screen panel than that in smaller diagonal screen panel to avoid perceptible slow optical response, which is fatal problem in TV image quality.

In CRT base TV image, phosphor emission at each pixel element is extremely fast such as several micro second compared to conventional TFT-LCDs, so that regardless screen diagonal size, screen image velocity depending on screen diagonal size is far beyond human eye time resolution perceptive. However, optical response at conventional TFT-LCDs is typically several tens of milliseconds, and inter gray scale optical response time is couple of hundreds milliseconds. Because, typical human eye time resolution is said that hundred milliseconds, so that conventional TFT-LCDs slow optical response time is perceptive enough for human eyes. Therefore, large screen direct view TVs using conventional TFT-LCD technology has significant problem in terms of reproduction of natural TV image familiar with CRT base TV image for most human eyes.

Other image quality problem in conventional TFT-LCD TV is its image blur. This image blur is not from slow optical response of TFT-LCD, but from its frame response. CRT base TV uses very short but very strong emission in a frame. This emission time from phosphor is such as several microseconds in a frame time of 16.7 milliseconds for 60 Hz of frame rate. This short but extremely strong emission gives some sort of impact to human eyes, resulting in whole frame image in human eyes. On the contrary, conventional TFT-LCD image keeps same brightness level in the period of whole frame. In a very rapid movement image, this holding type brightness in a period of whole frame makes image blur. Cinema image based on film had same image blur problem. Now cinema image uses mechanical shuttering to make blanking in order to avoid this image blur.

(Other applications required full color video image)

As mentioned above, most of recent applications of TFT-LCDs require full color video image. Not only TV application, Digital Versatile Discs (DVDs), gaming monitors, computer monitor displays also make fusion with TV image. Although actual required image quality is very dependent on screen diagonal size, particularly for TV image case, CRT equivalent TV image quality is absolutely required for all of full motion video image applications. In this very clear requirement, conventional TFT-LCDs have significant problem in their optical response time, in particular, inter gray scale response as mentioned above.

Moreover, image blur due to constant brightness in a period of a frame makes TFT-LCDs difficult to apply to TV image applications. Although some trial to reduce this fatal image blur problem in TFT-LCDs by inserting backlight blanking described in International Display Workshop in Kobe, "Consideration on Perceived MTF of Hold Type Display for Moving Image"; pp. 823-826, (1998), T. Kurita, et.al. This method makes backlight life time short, which is current dominant factor to decide TFT-LCD life time. As TV application, shortening backlight life time due to this blanking, degrades TFT-LCD TV value significantly.

(Technical issue)

Technical problems to be solved by new technology are somewhat dependent on actual application field. For each particular application field, following shows particular technical problem required to be solved at each application. However, the principle technology solving above requirements is common based on the enhancement of liquid crystal molecular alignment at the PSS-LCDs. The PSS-LCD or the polarization shielded Smectic liquid crystal displays have been invented as described at the United States patent application "US-2004/0196428 Al". The concept and the purpose of this technique are to provide the most fundamental method to obtain the liquid crystal molecular alignment of the PSS-LCD in terms of realizing higher display performance and/or higher manufacturability or higher manufacturing yield.

(Small screen high resolution displays)

As described in previous section, conventional micro color filter TFT-LCD has significant difficulty in its applicability for this particular application due to significant low aperture ratio and lower manufacturing yield based on smaller pixel pitch. Field sequential color method has been known as an effective way to keep high aperture ratio in small screen size with high resolution displays.

A couple of papers on field sequential color displays such as International Workshop on Active Matrix Liquid Crystal Displays in Tokyo (1999), "Ferroelectric Liquid Crystal Display with Si Backplane"; A. Mochizuki, pp.181-184, ibid; "A Full-color FLC Display Based on Field Sequential Color with TFTs", T. Yoshihara, et.al, pp.185-188. describe advantages of field sequential color method in detail.

As described in these papers, field sequential color uses same one pixel to represent Red, Green, and Blue colors in time sequentially. Fast optical response to realize field sequential color is the most important in this system. In order to have natural color image without showing color breaking, at least three times faster optical response in liquid crystal switching is required to have 3x frame rate than conventional micro color filter color reproduction.

Conventional Twisted Nematic (TN) liquid crystal drive mode, which is the most popular and current dominant drive mode, does not have enough optical switching response to satisfy this 3x frame rate. Thus, new fast optical response

liquid crystal drive mode is necessary to realize the field sequential color display. As long as we could have fast optical response drive mode, field sequential color display realizes both high aperture ratio and high resolution as shown in Fig. 3, which provides bright, high resolution, and fast enough optical response for the advanced cell phone displays with lower power consumption.

The field sequential color display system has been introduced using Nematic liquid crystal, Surface Stabilized Ferroelectric Liquid Crystal (SSFLC) in conjunction with silicon backplane, and TFT driven ferroelectric liquid crystal which shows analog gray scale. The Nematic liquid crystal used field sequential color display has extremely thin panel gap of 2 μm as Nematic LCD. This realizes 180 Hz frame rate response of the liquid crystal. This system enables both high aperture ratio and high resolution as described in Denshi Gijyuts July, 1998 in Tokyo "Liquid crystal fast response technology and its application"; M. Okita, pp.8-12 (in Japanese).

However, this system could not fully use advantage of high aperture ratio due to the.nature of TN optical response profile as shown in Fig. 4 (a). There is very big difference in backlight throughput efficiency between conventional color filter with continuous emitting white backlight and field sequential color system. In conventional color system, aperture ratio of the panel directly represents light throughput and image quality. However, in field sequential color system, light throughput and image quality such as contrast ratio, color purity are decided as combination properties between liquid crystal optical response profile and backlight emission timing.

Fig. 4(a) and 4(b) show very simple difference in light throughput between symmetrical and asymmetrical optical response profiles in rise and fall. As these figure show the difference, light throughput of field sequential color display is decided by both liquid crystal optical response profile and backlight emission timing. Due to long tail nature of fall profile in TN-LCD, most of backlight emission at fall edge is not used as display. On the contrary, Fig. 4(b) case using symmetrical response profile both rise and fall edges, most of backlight emission is fully used as display. Therefore, in field sequential color display, high aperture ratio is not enough to keep low power consumption, or bright screen. Symmetrical response profile to maximize use of backlight emission is necessary to keep bright screen with low power consumption.

Moreover, Fig. 4(a) and 4(b) present that long tail fall profile has possible color contamination, if the tail reaches at next frame backlight emission. This case easily happens at lower temperature range where TN optical response shows significant slow one due to increase of viscosity of liquid crystal. In this case, due to light leakage at "black" level, significant contrast ratio reduction happens at the same time with color mixing. Thus, in order to obtain high performance filed sequential color display, both fast optical response and symmetrical response profile are necessary.

This properties are actually realized by conventional SSFLCD and analog gray scale capable FLCD. The conventional SSFLCD has no analog gray scale capability, so that TFT array could not provide full color video image due to limited electron mobility of the TFTs. Silicon backplane provides enough electron mobility to drive SSFLCD as pulse width modulation, so that full color video image is possible.

However, due to economical reason, silicon backplane is difficult to apply to direct view large screen display in conjunction with difficulty in front lit lighting system in enough brightness. Analog gray scale capable FLC such as Polymer Stabilized V-shaped Ferroelectric Liquid Crystal Display (PS-V-FLCD) described by Japanese Journal of Applied Physics; "Preliminary Study of Field Sequential Full color Liquid Crystal Display using Polymer Stabilized Ferroelectric Liquid Crystal Display"; Vol. 38, (1999) L534-L536; T. Takahashi, et.al., shows same electro-optical response with TN-LCD. Here, the "V-shaped" is designated as an analog gray scale capability controlled by applied electric field strength. In the applied voltage (V) and transmittance (T) relationship, the analog gray scale LCD shows "V-shaped", so that hereinafter, the word "V-shaped" is equivalent with analog gray scale capability controlled by the applied electric field strength.

Thus it would be applicable for small screen with high resolution display application. This system, however, requires photo-polymerization process by UV light. The UV exposure process has risk to provide decomposition of liquid crystal itself. In order to avoid liquid crystal decomposition at the UV exposure process, very strict control in process is required. Moreover, the physical meaning of the V-shaped is no-threshold in its voltage-transmittance curb (V-T curb), which is not practical in actual application, in particular TFT driven LCDs that have threshold voltage variation in their TFTs. For practical application, current conventional TFTs require to have a certain amount of threshold voltage in the liquid crystal drive mode. Therefore, non-threshold or V-shaped response is not practically applicable to the TFT drive devices.

In conclusion, an ideal small and high resolution display for advanced cell phone is analog gray scale capable with both rise/fall fast optical response profile shown in the PSS-LCDs as described in US patent application "US-2004/0196428 Al".

(Large screen direct view TV application)

In large screen direct view TV application, it has been described that increase in screen size requires increase in image velocity. The increase in image velocity needs decrease in liquid crystal optical response time at each pixel

element. In economical point of view, regardless liquid crystal technologies, it is extremely important to use current existing large panel manufacturing line without necessity of introducing entirely new manufacturing equipment. This also means that regardless liquid crystal technologies, most of current existing manufacturing process is applicable for stable and well controlled production process. Therefore, fast response new liquid crystal drive mode should fit for current standard micro color filter TFT array process. The conventional SSFLCD is superior in its extremely fast optical response, however, this has no capability in analog gray scale response. Due to no analog gray scale capability, the conventional SSFLCD is not able to be driven by conventional micro color filter TFT array.

The Polymer Stabilized V-shaped FLCD which has analog gray scale capability potentially fits for current existing volume production line and process. One restriction of Polymer Stabilized V-shaped FLCD in terms of availability of current volume production line and process is applied voltage through TFT array. Mainly in economical reason, maximum applied voltage to each pixel is limited to 7V. Using polymer with FLC material at Polymer Stabilized V-shaped FLCD, saturation voltage control within 7V is not easy. Very strict materials quality control and process control, in particular UV polymerization process control is required to keep saturation voltage less than 7V. For large screen panel manufacturing, this quality and process control are very difficult in terms of keeping uniformity in large screen area. In order to keep wide enough process control window, lowering saturation voltage of liquid crystal is necessary. Moreover, current most popular and most economical liquid crystal drive array, which is an amorphous silicon TFT, does not have good enough electron mobility to supply good enough electron charges to liquid crystals having spontaneous polarization such as the liquid crystal for SSFLCDs, V-shaped FLCD and antiferroelectric liquid crystal displays.

In this purpose, mixing photo polymerization material should be eliminated. Without increasing additional new process such as UV polymerization process, maximizing current available stable manufacturing process is very important to keep cost competitive performance. Moreover, elimination of any spontaneous polarization from Smectic liquid crystal materials which is described in US patent application "US-2004/0196428 Al" is the most critical in terms of practical driving by conventional TFT arrays.

US 2003/0076468 A1 relates to a photopolymerizable resin, which induces a specific wavelength-selective reflection, In particular, it discloses a selectively reflective film which is obtained by forming on a substrate a liquid crystal composition layer which exhibits a smectic phase. According to US 2003/0076468 A1, the composition can also include an alignment agent, which controls the alignment of the liquid crystal molecules at the air interface side.

US 2004/0105066 A1 relates to an invention such that a specific photopolymerizable monomer is mixed with a liquid crystal material, so as to fix a specific oriented state in the liquid crystal material by photopolymerization. In particular, it discloses a liquid crystal display device comprising a liquid crystal material composition which may show a transition to the smectic phase and which is disposed between a pair of substrates. Said liquid crystal material composition comprises a liquid crystal, which shows a nematic phase at an ordinary temperature and a negative dielectric anisotropy, and an alignment control agent, such as an acrylate monomer.

US 6,727,968 B1 relates to an invention such that a specific oligomer and a low-molecular weight polymer are mixed with a liquid crystal material, so as to weaken the liquid crystal molecule-regulating force in the interface with an alignment film, to thereby enhance the response of the liquid crystal molecules to the application an electric field.

US 5,032,009 A relates to the orientation of liquid crystal molecules utilizing a photopolymerizable monomer.

US 3,979.320 A relates to an invention such that a specific additive is added to a liquid crystal material, so as to enhance the light scattering in DSM (dynamic scattering mode) liquid crystal display.

YUE ZHAO ET AL: "USE OF A GELATOR IN A FERROELECTRIC LIQUID CRYSTAL: PITCH COMPENSATION AND NANOFIBRES" LIQUID CRYSTALS, TAYLOR AND FRANCIS, ABINGDON, GB, vol. 1, no. 30, January 2003 (2003-01), pages 81-86, ISSN: 0267-8292 relates to a new azobenzene-containing gelator for liquid crystals, to be used for the preparation of a ferroelectric liquid crystal (FLC) gel.

US 3,871,904 A relates to a liquid crystal display using nematic-cholesteric phase transition, wherein liquid crystal molecules are caused to align perpendicular to a substrate surface at the interface with the substrate surface.

US2004/0196428A1 relates to a PSS-LCD technique for exhibiting an affective liquid crystal display performance.

US 2004/003 1950 A1 relates to a specific liquid crystal molecule-orientation film.

GB 1376115A relates to a method of modifying a nematic phase by adding a specific carboxylic acid derivative to the nematic phase.

EP 1336636A1 relates to a liquid crystal-aligning agent having a specific structure.

Disclosure of Invention

An object of the present invention is to provide a liquid display device which is capable of solving the above-mentioned problem encountered in the prior art.

Another object of the present invention is to provide a liquid display device capable of providing a

display performance which is better than the liquid display device in the prior art.

As a result of earnest study, the present inventor has found that, it is extremely effective to constitute a liquid crystal device by using a specific liquid crystal composition comprising a Smectic phase liquid crystal material, and a molecular alignment-enhancing agent.

The liquid crystal device according to the present invention is based on the above discovery. More specifically, the present invention relates to a liquid crystal device comprising: at least a pair of substrates; and

a liquid crystal material composition disposed between the pair of substrates,
wherein the liquid crystal material composition comprises, at least, a Smectic phase liquid crystal material, and a molecular alignment-enhancing agent;
the Smectic phase liquid crystal material has a molecular long axis or n-director having a tilt angle to its layer normal as a bulk material, and the molecular long axis of the Smectic phase liquid crystal material aligns parallel to the pre-setting alignment direction, resulting in its long axis layer normal (i.e., thereby making its molecular long axis normal to its layer); and
the molecular alignment-enhancing agent has a molecular axis or n-director having no tilt angle to its layer normal as a bulk material, and the molecular alignment-enhancing agent has a double bond structure in its molecule.

The present invention also provides a A liquid crystal material composition, comprising, at least, a Smectic phase liquid crystal material, and a molecular alignment-enhancing agent;
wherein the Smectic phase liquid crystal material has a molecular long axis or n-director having a tilt angle to its layer normal as a bulk material, and the molecular long axis of the Smectic phase liquid crystal material aligns parallel to the pre-setting alignment direction, resulting in its long axis layer normal; and
the molecular alignment-enhancing agent has a molecular axis or n-director having no tilt angle to its layer normal as a bulk material, and the molecular alignment-enhancing agent has a double bond structure in its molecule.

According to the present inventor's knowledge and investigation, it is presumed that the above-mentioned phenomenon that the molecular long axis of the Smectic phase liquid crystal material to align to parallel to the pre-setting alignment direction, thereby making its molecular long axis normal to its layer, is attributable to the provision of a strong enough azimuthal anchoring energy, as described hereinafter. Such a strong enough azimuthal anchoring energy may preferably be provided, e.g., by a certain alignment method as described hereinafter.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

BRIEF DESCRIPTION OF THE DRAWINGS

Fig. 1 schematically shows current RGB sub-pixel structure in TFT-LCDs.
Fig. 2 schematically shows image velocity difference in TV image.
Fig. 3 schematically shows high aperture ratio and high resolution which have been realized in the fast optical response drive mode.
Fig. 4 schematically shows a slow response and a fast response, in field sequential color displays, respectively in a nematic-type display (a) and a PSS-type display (b).
Fig. 5 schematically shows PSS-LC molecules being parallel to z-direction.
Fig. 6 schematically shows an example of coordination of PSS-LC molecular setting.
Fig. 7 schematically shows an example of layered structure stacking on an alignment layer, which is formed parallel to substrates.
Fig. 8 shows an example of actually measured results obtained in the case of the PSS-LCD panel (using a molecular alignment-enhancing agent) adopted for the present invention.
Fig. 9 schematically shows an example of Smectic liquid crystal mixture cell without using a molecular alignment-enhancing agent.
Fig. 10 schematically shows an example of buffing angle of laminated panel.
Fig. 11 schematically shows an example of analog gray scale response of PSS-LCD.
Fig. 12 schematically shows an example of analog gray scale response of oblique evaporation alignment layer panel.
Fig. 13 schematically shows another example of analog gray scale response of oblique evaporation alignment layer panel.

Best mode for carrying out the Invention

Hereinbelow, the present invention will be described in detail with reference to the accompanying drawings, as desired. In the following description, "%" and "part(s)" representing a quantitative proportion or ratio are those based on mass, unless otherwise noted specifically.

(Liquid crystal device)

The liquid crystal device according to the present invention comprises, at least a pair of substrates; and a liquid crystal material composition disposed between the pair of substrates, wherein the liquid crystal material composition comprises, at least, a Smectic phase liquid crystal material, and a molecular alignment-enhancing agent.
In the liquid crystal device according to the present invention, the Smectic phase liquid crystal material has a molecular long axis or n-director having a tilt angle to its layer normal as a bulk material, and the molecular long axis of the Smectic phase liquid crystal material aligns parallel to the pre-setting alignment direction, resulting in its long axis layer normal; and the molecular alignment-enhancing agent has a molecular axis or n-director having no tilt angle to its layer normal as a bulk material, and the molecular alignment-enhancing agent has a double bond structure in its molecule.

(Confirmation of tilt angle)

The above-mentioned tilt angle may be confirmed by the following method.

(Method of measurement of molecular tilt from layer normal)

Using a polarized microscope whose analyzer and polarizer are set as cross Nicole, the liquid crystal molecular direction (n-director) is measurable. If the n-director is aligned as the layer normal, under the cross Nicole setting, the light transmittance through from the liquid crystal panel is the minimum or showing the extinction angle, when the pre-setting molecular alignment direction fits with the absorption angle of the analyzer. If the n-director is not aligned as layer normal, which has a tilt angle from the layer normal, under the cross Nicole setting, the light transmittance through the liquid crystal panel is not the minimum or not showing the extinction angle.

(Confirmation of alignment of liquid crystal material)

The above-mentioned alignment of the liquid crystal material may be confirmed by the following method.
Using a polarized microscope whose analyzer and polarizer are set as cross Nicole, the liquid crystal molecular direction (n-director) is measurable. If the n-director is aligned as the layer normal, under the cross Nicole setting, the light transmittance through from the liquid crystal panel is the minimum or showing the extinction angle, when the pre-setting molecular alignment direction fits with the absorption angle of the analyzer. If the n-director is not aligned as layer normal, which has a tilt angle from the layer normal, under the cross Nicole setting, the light transmittance through the liquid crystal panel is not the minimum or not showing the extinction angle.

(confirmation of performance of molecular alignment-enhancing agent)

How much the designed molecular alignment direction has been obtained is measurable by following method.
Using a polarized microscope whose analyzer and polarizer are set as cross Nicole, the liquid crystal molecular direction (n-director) is measurable. The uniformity of this molecular alignment is also measurable quantitatively as the light throughput at the extinction angle described below. More strongly aligned or uniformly aligned liquid crystal molecules provide less light throughput at the extinction angle. If the n-director is aligned as the layer normal, under the cross Nicole setting, the light transmittance through from the liquid crystal panel is the minimum or showing the extinction angle, when the pre-setting molecular alignment direction fits with the absorption angle of the analyzer. The lower transmittance means the stronger or more uniform molecular alignment, which means more enhancement in molecular alignment. If the n-director is not aligned as layer normal, which has a tilt angle from the layer normal, under the cross Nicole setting, the light transmittance through the liquid crystal panel is not the minimum or not showing the extinction angle.

(confirmation of extinction angle)

The above-mentioned extinction angle of the liquid crystal device may be confirmed by the following method.
Using a polarized microscope whose analyzer and polarizer are set as cross Nicole, the liquid crystal molecular

direction (n-director) is measurable. If the n-director is aligned as the layer normal, under the cross Nicole setting, the light transmittance through from the liquid crystal panel is the minimum or showing the extinction angle, when the pre-setting molecular alignment direction fits with the absorption angle of the analyzer. If the n-director is not aligned as layer normal, which has a tilt angle from the layer normal, under the cross Nicole setting, the light transmittance through the liquid crystal panel is not the minimum or not showing the extinction angle.

(A preferred embodiment)

In a preferred embodiment of the present invention, the liquid crystal device may preferably comprise, at least a pair of substrates; and a Smectic phase liquid crystal material disposed between the pair of substrates, the Smectic phase liquid crystal material aligning its molecular long axis having a tilt angle to its layer normal as a bulk material, wherein the surface of the substrates has a strong enough azimuthal anchoring energy to cause the molecular long axis of the Smectic phase liquid crystal material to align to parallel to the pre-setting alignment direction making its molecular long axis normal to its layer.

(Confirmation of strong enough azimuthal anchoring energy)

In the present invention, the above-mentioned strong enough azimuthal anchoring energy may be confirmed by confirming that the molecular long axis of the Smectic phase liquid crystal material aligns to parallel to the pre-setting alignment direction making its molecular long axis normal to its layer. This confirmation may be effected by the following method.

In general, azimuthal anchoring energy is measurable by so called the crystal rotation method. This method is described in such as "An improved Azimuthal Anchoring Energy Measurement Method Using Liquid Crystals with Different Chiralities": Y. Saitoh and A. Lien, Journal of Japanese Applied Physics Vol. 39, pp. 1793 (2000). The measurement system is commercially available from several equipment companies. In here, particularly the strong enough azimuthal anchoring energy is very clear to be confirmed as following. The meaning of "strong enough azimuthal anchoring energy" is the most necessary to obtain the liquid crystal molecule's n-director aligned to along with pre-set alignment direction using the liquid crystal molecule whose n-director usually aligns with a certain angle of tilt from layer normal. Therefore, if the prepared surface successfully aligns the liquid crystal's n-director along with the pre-set alignment direction, it means "strong enough" anchoring energy.

(Liquid crystal material)

In the present invention, a certain type of Smectic phase liquid crystal.material is used. Herein, "Smectic phase liquid crystal material" refers to a liquid crystal material capable of showing a Smectic phase. Accordingly, it is possible to use a liquid crystal material without particular limitation, as long as it can show a Smectic phase.

(Preferred liquid crystal material)

In the present invention, it is preferred to use a liquid crystal material having the following capacitance property.

(Molecular alignment-enhancing agent)

In the present invention, a molecular alignment-enhancing agent is used. Herein, "molecular alignment-enhancing agent" refers to an agent which can enhance the PSS-LCD molecular alignment in conjunction with enhancement of quadra-pole momentum. This performance of the molecular alignment-enhancing agent can be selected from various agents in the following manner.

(Selection of molecular alignment-enhancing agent)

For this particular purpose, the selection of the usable molecular alignment enhancement material is following.

The material needs to have complete miscibility with Smectic liquid crystal materials in order to have a complete mixture. For this purpose, the material must have similar molecular structure with most of Nematic or Smectic liquid crystal materials. The molecule is also required to provide good enough Coulomb-Coulomb interaction. For this particular purpose, the materials have to have somewhat electron rich structure such as a double bond in their molecular structure.

(Preferred molecular alignment-enhancing agent)

In order to enhance the quadra-pole momentum of the PSS liquid crystal mixture, a molecular alignment-enhancing agent may preferably be used. This agent may preferably have following features:

(a) Good miscibility with Smectic C phase, Smectic H phase, Smectic I phase, Chiral Smectic C phase, Chiral Smectic H phase, Chiral Smectic I phase, and other phases belongs to the least asymmetric molecular structure.
(b) Pai-electron rich structure in the molecular structure to enhance Coulomb-Coulomb interaction between the agent and the surface of the alignment layer.

(1) The agent may preferably have following molecular structure at least (a), and at least one of (b) to (e)

(a) Nematic-like molecular structure for good miscibility with Smectic liquid crystal mixture.
(b) Carbon-carbon double bond structure in the molecule
(c) Carbon-Nitrogen double bond structure in the molecule
(d) Carbon-carbon triple bond structure in the molecule
(e) Nitrogen-nitrogen double bond structure in the molecule

These specific features work as an enhancement of the PSS-LCD molecular alignment in conjunction with enhancement of quadra-pole momentum.

(Specific examples of molecular alignment-enhancing agent)

Examples of the molecular-alignment enhancing agent may include those having the following formulas:

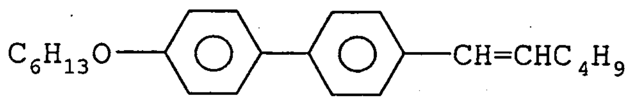

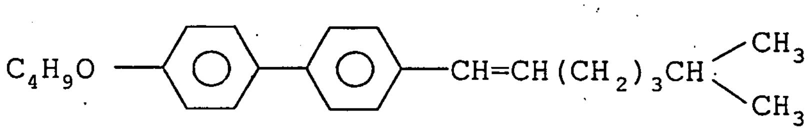

(Amount of molecular alignment-enhancing agent)

In the present invention, the amount of the molecular alignment-enhancing agent is not particularly limited, as long as a desired performance of a cell as described above can be provided. In general, the amount of the molecular alignment-enhancing agent may preferably be 2 parts or more, more preferably 2 to 10 parts, further preferably 2 to 8 parts (particularly, 6 to 8 parts), based on the total amount (100 parts) of the liquid crystal material.

(Capacitance property)

Although the PSS-LCD uses smectic liquid crystal materials, due to its expected origin of the induced polarization created from quadra-pole momentum, pixel capacitance at each LCD is small enough compared to conventional LCDs. This small capacitance at each pixel will not request any particular change of TFT design. The major design issue at TFT is its required electron mobility and its capacitance with keeping high aperture ratio. Therefore, if the new LCD drive mode requires more capacitance, TFT is necessary to have a major design change, which is not easy both in terms of technically and economically. One of the most important benefits of the PSS-LCD is its smaller capacitance as a bulk liquid crystal capacitance. Therefore, if the PSS-LC materials are used as a transmittance type of LCD, its pixel capacitance is almost half to one third compared to that of conventional nematic base LCD. If the PSS-LCD is used as reflective LCD such as LCoS display, its pixel capacitance is almost same with that for transmittance nematic base LCD, and almost half to one third compared that of reflective conventional nematic base LCD.

(Capacitance measurement of liquid crystal panels)

The pixel capacitance of the LCD is commonly measured by the standard method described in following. Liquid crystal device handbook: Nikkan Kogyo in Japanese Chapter 2, Section 2.2: pp. 70, Measuring method of liquid crystal properties

A liquid crystal panel to be examined is inserted between a polarizer and an analyzer which are arranged in a cross-Nicole relationship, and the angle providing the minimum light quantity of the transmitted light is determined while the liquid crystal panel is being rotated. The thus determined angle is the angle of the extinction position.

(Liquid crystal material having preferred property)

In the present invention, it is required to use a liquid crystal material belonging to the least symmetrical group. The requirement for the PSS-LCD performance from the view point of the liquid crystal materials is enhancement of quadra-pole momentum in the liquid crystal device. Therefore, the used liquid crystal molecule must have the least symmetrical molecular structure. The exact molecular structure is dependent on the required performance as the final device. If the final device is for a mobile display application, rather low viscosity is more important than that for larger panel display application, resulting in smaller molecular weight molecules are preferred. However, the lower viscosity is the total property as the mixture. Some times, the mixture's viscosity is decided not by each molecular component, but by inter-molecular interaction. Even the optical performance requirement such as birefringence is also very dependent on application. Therefore, the most and solely requirement in the liquid crystal material here is its least symmetrical or the most asymmetrical molecular structure in the Smectic liquid crystal molecules.

(Specific examples of preferred liquid crystal material)

In the present invention, it is preferred to use a liquid crystal material selected form the following liquid crystal materials. Of course, these liquid crystal materials may be used singly or as a combination or mixture of two or more kinds thereof, as desired. The Smectic liquid crystal material to be used in the present invention may be selected from the group consisting of: Smectic C phase materials, Smectic I phase materials, Smectic H phase materials, Chiral Smectic C phase materials, Chiral Smectic I phase material, Chiral Smectic H phase materials.

Specific examples of the Smectic liquid crystal material to be used in the present invention may include the following compounds or materials.

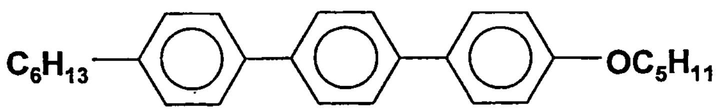

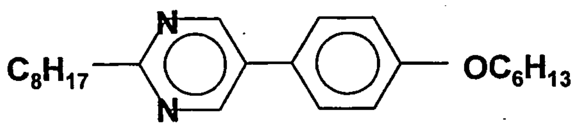

(Pre-tilt angle)

The surface of the substrates constituting the liquid crystal device according to the present invention may preferably have a pre-tilt angle to the filled liquid crystal material of no larger than 5 degrees, more preferably no larger than 3 degrees, further preferably no larger than 2 degrees. The pre-tilt angle to the filled liquid crystal material may be determined by the following method.

In general, the measurement method of pre-tilt at LCD device is used so called the crystal rotation method, which is popular and the measuring system is commercially available. However, here the required pre-tilt is not for Nematic liquid crystal materials, but for Smectic liquid crystal materials who has a layer structure. Therefore, the scientific definition of the pre-tilt angle is different from that for non-layer liquid crystal materials.

The requirement of the pre-tilt for the present invention is to stabilize azimuthal anchoring energy. The most important requirement for the pre-tilt is actually not for its angle, but stabilization of the azimuthal anchoring energy. As long as the pre-tilt angle does not have conflict with azimuthal anchoring energy, higher pre-tilt may be acceptable. So

far, experimentally, current available alignment layers suggest lower pre-tilt angle to stabilize preferred molecular alignment. However, there is no particular scientific theory to deny higher pre-tilt angle requirement. The most important requirement to the pre-tilt is to provide stable enough PSS-LCD molecular alignment.

Most of commercially available polymer base alignment materials are sold with data of pre-tilt angle. If the pre-tilt angle is unknown, the value is measurable using the crystal rotation method as the representative pre-tilt for a specific cell condition.

(Provision of anchoring energy)

The method of providing the anchoring energy is not particularly limited, as long as the method may provide a strong enough.azimuthal anchoring energy to cause the molecular long axis of the Smectic phase liquid crystal material to align to parallel to the pre-setting alignment direction making its molecular long axis normal to its layer. Specific examples of the method may include: e.g., mechanical buffing of a polymer layer; a polymer layer whose top surface has been exposed by polarized UV light; oblique evaporation of a metal oxide material, etc. Of these methods of providing the anchoring energy, a reference: Liquid crystal device handbook: Nikkan Kogyo in Japanese, Chapter 2, Section 2.1, 2.1.4: pp. 40, and 2.1.5 pp. 47, may referred to, as desired.

In the case of oblique evaporation of a metal oxide material, the oblique evaporation angle may preferably be no less than 70 degrees, more preferably no less than 75,further preferably no less than 80 degrees.

<Method of Measuring Molecular Initial Alignment Atate for Liquid Crystal Molecules>

In general, the major axis of liquid crystal molecules is in fair agreement with the optical axis. Therefore, when a liquid crystal panel is placed in a cross Nicole arrangement wherein a polarizer is disposed perpendicular to an analyzer, the intensity of the transmitted light becomes the smallest when the optical axis of the liquid crystal is in fair agreement with the absorption axis of the analyzer. The direction of the initial alignment axis can be determined by a method wherein the liquid crystal panel is rotated in the cross Nicole arrangement while measuring the intensity of the transmitted light, whereby the angle providing the smallest intensity of the transmitted light can be determined.

<Method of Measuring Parallelism of Direction of Liquid Crystal Molecule Major Axis with Direction of Alignment Treatment>

The direction of rubbing is determined by a set angle, and the slow optical axis of a polymer alignment film outermost layer which has been provided by the rubbing is determined by the kind of the polymer alignment film, the process for producing the film, the rubbing strength, etc. Therefore, when the extinction position is provided in parallel with the direction of the slow optical axis, it is confirmed that the molecule major axis, i.e., the optical axis of the molecules, is in parallel with the direction of the slow optical axis.

(Substrate)

The substrate usable in the present invention is not particularly limited, as long as it can provide the above-mentioned specific "molecular initial alignment state" In other words, in the present invention, a suitable substrate can appropriately be selected in view of the usage or application of LCD, the material and size thereof, etc. Specific examples thereof usable in the present invention are as follows.

A glass substrate having thereon a patterned a transparent electrode (such as ITO)

An amorphous silicon TPT-array substrate

A low-temperature poly-silicon TFT array substrate.

A high-temperature poly-silicon TFT array substrate

A single-crystal silicon array substrate.

(Preferred Substrate Examples)

Among these, it is preferred to use following substrate, in a case where the present invention is applied to a large-scale liquid crystal display panel.

An amorphous silicon TFT array substrate

(Alignment Film)

The alignment film usable in the present invention is not particularly limited as long as it can provide the above-mentioned tilt angle, etc., according to the present invention. In other words, in the present invention, a suitable alignment film can appropriately be selected, in view of the physical property, electric or display performance, etc. For example, various alignment films as exemplified in publications may generally be used in the present invention. Specific preferred examples of such alignment films usable in the present invention are as follows.

Polymer alignment film: polyimides, polyamides, polyamide-imides

Inorganic alignment film: SiO2, SiO, Ta2O5, ZrO, Cr2O3, etc.

(Preferred Alignment Film Examples)

Among these, it is preferred to use the following alignment film, in a case where the present invention is applied to a projection-type liquid crystal display.

Inorganic Alignment Films

In the, present invention, as the above-mentioned substrates, liquid crystal materials, and alignment films, it is possible to use those materials, components or constituents corresponding to the respective items as described in "Liquid Crystal Device Handbook" (1989), published by The Nikkan Kogyo Shimbun, Ltd. (Tokyo, Japan), as desired.

(Other Constituents)

The other materials, constituents or components, such as transparent electrode, electrode pattern, micro-color filter, spacer, and polarizer, to be used for constituting the liquid crystal display according to the present invention, are not particularly limited, unless they are against the purpose of the present invention (i.e., as long as they can provide the above-mentioned specific molecular initial alignment state). In addition, the process for producing the liquid crystal display device which is usable in the present invention is not particularly limited, except the liquid crystal display device should be constituted so as to provide the above-mentioned specific molecular initial alignment state". With respect to the details of various materials, constituents or components for constituting the liquid crystal display device, as desired, "Liquid Crystal Device Handbook" (1989), published by The Nikkan Kogyo Shimban, Ltd. (Tokyo, Japan) may be referred to.

(Means for Realizing Specific Initial Alignment)

The means or measure for realizing such an alignment state is not particularly limited, as long as it can realize the above-mentioned specific "molecular initial alignment state". In other words, in the present invention, a suitable means or measure for realizing the specific initial alignment can appropriately be selected, in view of the physical property, electric or display performance, etc.

The following means may preferably be used, in a case where the present invention is applied to a large-sized TV panel, a small-size high-definition display panel, and a direct-view type display.

(Preferred Means for Providing Initial Alignment)

According to the present inventors' investigation and knowledge, the above-mentioned suitable initial alignment may easily be realized by using the following alignment film (in the case of baked film, the thickness thereof is shown by the thickness after the baking) and rubbing treatment. On the other hand, in ordinary ferroelectric liquid crystal displays, the thickness of the alignment film 3,000 A (angstrom) or less, and the strength of rubbing (i.e., contact length of rubbing) 0.3 mm or less.

Thickness of alignment film: preferably 4,000 A or more, more preferably 5,000 A or more (particularly, 6,000 A or more).

Strength of rubbing (i.e., contact length of rubbing): preferably 0.3 mm or more, more preferably 0.4 mm or more (particularly, 0.45 mm or more). The above-mentioned alignment film thickness and strength of rubbing may be measured, e.g., in a manner as described in Example 1 appearing hereinafter

(Comparison of the Present Invention and Background Art)

Herein, for the purpose of facilitating the understanding of the above-mentioned structure and constitution of the present invention, some features of the liquid crystal device according to the present invention will be described in comparison with those having different structures.

(Theoretical background of the invention)

The present invention is based on detail investigation and analysis of molecular alignment of the PSS-LCDs, which is thought to be significant advantages for small screen with high resolution LCDs and large screen direct view LCD TV applications as well as large magnified projection panels. Next, the technical background of the invention will be described.

(Polarization Shielded Smectic Liquid Crystal Displays)

The polarization shielded Smectic liquid crystal display (PSS-LCD) is described in the United States Patent application number US-2004/0196428 A1 that using the least symmetrical molecular structure's liquid crystal materials in order to enhance quadra-pole momentum. These patent applications discuss the basic mechanism of the PSS-LCD. Also this patent describes a practical method to manufacture the PSS-LCDs.

As described in above patent applications, one of the most unique points of the PSS-LCD is to have a specific liquid crystal molecular alignment as the initial alignment state. Using a certain kind of Smectic liquid crystal materials whose natural molecular n-director alignment has a specific tilt from the Smectic layer in conjunction with the strong azimuthal anchoring energy of the surface, this molecular n-director is forced to align layer normal. In another word, the least symmetrical molecule whose n-director has a certain tilt angle from the layer normal is aligned its n-director with layer normal by a specific artificial alignment force.

This initial alignment creates unique display performance at the PSS-LCD. This molecular alignment is similar with Smectic A phase whose n-director is normal to the layer, however, this specific molecular alignment is realized only when the liquid crystal molecules are under the strong azimuthal anchoring energy surface with weaker polar anchoring surface condition. Therefore, these molecules are called as the Polarization Shielded Smectic or PSS phase. This patent application provides the fundamental method to give the most necessary condition to realize high performance PSS-LCDs. In order to realize this artificial n-director alignment at the PSS-LCD, strong azimuthal molecular alignment as well as weaker polar anchoring is the most necessary as described in the patent application.

The conventional nematic base LCDs use steric interaction based on Van der Waals force for their initial molecular alignment. The steric interaction gives a good enough initial molecular anchoring energy for the most of nematic liquid crystal molecules whose molecular anchoring is ordering n-director without necessity of n-director change artificially. Because of alignment nature of nematic liquid crystal molecules, their n-directors are always aligned in one same direction under the certain order parameter.

Unlike nematic liquid crystal molecules, Smectic liquid crystal molecules form a layer structure. This layer structure is not a real structure, but a virtual structure. Due to higher order parameter of Smectic liquid crystal than that for nematic liquid crystal, Smectic liquid crystal molecules have higher order molecular alignment forming their mass center alignment. Compared to natural molecular alignment of Smectic liquid crystals, nematic liquid crystals never align themselves keeping their mass center in a certain order such as that of Smectic liquid crystals.

The present invention is based on the basic research of the azimuthal anchoring energy and polar anchoring energy in terms of initial molecular n-director in Smectic phase of the least symmetrical Smectic liquid crystal molecules on a certain alignment surface. As one of the well known phenomena, the steric interaction based on Van der Waals interaction is much weaker than that is provided by Coulomb-Coulomb interaction. In order to enhance the Coulomb-Coulomb interaction between the Smectic liquid crystal molecules and a certain alignment surface, the surface interaction has been investigated specifically between the least symmetrical Smectic liquid crystal molecules and a high polarity surface of the alignment layer.

(Theoretical analysis of the surface anchoring in the PSS-LCD)

In order to clarify necessary condition for the initial PSS-LC configuration, a free energy of the PSS-LC cell is considered based on the following expression. Three primary free energies are expressed as following:

(a) Elastic energy density: $f_{elas}$

$$f_{elas} = \frac{B}{2}\left(\frac{\partial\phi}{\partial x}\right)^2 - D_1\left(\frac{\partial\phi}{\partial x}\right)\sin\phi \qquad \text{Equation (1)}$$

where B and Dl are Smectic layer and viscous elastic constant, respectively

The coordinate system is set as shown in Fig. 6.
where $\phi$is the azimuth presented in Fig. 6, $\times$ is set as cell thickness direction.
(b) Elastic interaction energy: $f_{elec}$

$$f_{elec}$$

$$f_{elec} = -\frac{1}{2}\Delta\varepsilon\left(\frac{\partial\psi}{\partial x}\right)^2 - \frac{1}{2}\varepsilon_{\perp 1}\left(\frac{\partial\psi}{\partial x}\right)^2 - \frac{1}{2}\varepsilon_{\perp 2}\left(\frac{\partial\psi}{\partial x}\right)^2 \quad \text{Equation (2)}$$

An electric field is given by the electrostatic potential $\phi$: i.e.;

$$Ex = -\frac{\partial\psi}{\partial x}$$

The dielectric anisotropy terms represented by

$$-\frac{1}{2}\varepsilon_{\perp 1}\left(\frac{\partial\psi}{\partial x}\right)^2 \text{ and } -\frac{1}{2}\varepsilon_{\perp 2}\left(\frac{\partial\psi}{\partial x}\right)^2$$

are for expressing contribution from quadra pole momentum.
(c) Surface interaction energy density: $F_{surf}$

According to Dahl and Lagerwall of their paper in Molecular Crystals and Liquid Crystals, Vol. 114, page 151 published in 1984, the surface interaction energy density is expressed as;

$$f_{surf} = \theta\left(-\gamma_p^0\cos\phi^0 + \gamma_p^1\cos\phi^1\right) + \left\{\gamma_t^0\left(\theta\sin\phi^0 - \alpha_t^0\right)^2 + \gamma_t^1\left(\theta\sin\phi^1 \pm \alpha_t^1\right)^2\right\} + \left\{\gamma_d^0\left(\theta\cos\phi^0 - \alpha_d^0\right)^2 + \gamma_d^1\left(\theta\cos\phi^1 + \alpha_d^1\right)^2\right\} \quad \text{Equation (3)}$$

Where $\theta$ is molecular tilt angle presented in Fig. 6, $\gamma$p, $\gamma$t, $\gamma$d: are surface interaction coefficients, at is pre-tilt angle, and ad is the preferred direction angle from z-direction set in Fig. 6.

Regarding the surface interaction energy density, the required condition in terms of the initial molecular alignment condition of the PSS-LCD is $\theta = 0$ and $f = 3\pi/2$ in Fig. 6. Taking account into these conditions, the equation (3) is now;

$$f_{surf} = \gamma_t^0\left(\alpha_t^0\right)^2 + \gamma_t^1\left(\alpha_t^1\right)^2 + \gamma_d^0\left(\alpha_d^0\right)^2 + \gamma_d^1\left(\alpha_d^1\right)^2 \quad \text{Equation (4)}$$

Also, the preferred pre-tilt angle of the PSS-LCD is zero, then the equation (4) goes to;

$$f_{surf} = \alpha_d^2\left(\gamma_d^0 + \gamma_d^1\right) \quad \text{Equation (5)}$$

Using the equations (1), (2), and (5), the total free energy per unit area F is;

$$F = \int_0^d (f_{elas} + f_{elect})\,dx + f_{surf}$$

$$= \int_0^d \left\{ \left( \frac{B}{2}\left(\frac{\partial\phi}{\partial x}\right)^2 - D\frac{\partial\phi}{\partial x}\sin\phi \right) + \left( -\frac{1}{2}\Delta\varepsilon\left(\frac{\partial\psi}{\partial x}\right)^2 - \frac{1}{2}\varepsilon_{\perp 1}\left(\frac{\partial\psi}{\partial x}\right)^2 - \frac{1}{2}\varepsilon_{\perp 2}\left(\frac{\partial\psi}{\partial x}\right)^2 \right\} dx + \alpha_d^2\left(\gamma_d^0 + \gamma_d^1\right) \quad \text{Equation (6)}$$

here, the symmetrical surface anchoring: γd0 = γd1, and φ → 3p/2 are introduced in the equation (6);

$$F = \int_0^d \left\{ \left( \frac{B}{2}\left(\frac{\partial\phi}{\partial x}\right)^2 - D\frac{\partial\phi}{\partial x} \right) - \frac{1}{2}\left(\Delta\varepsilon + \varepsilon_{\perp 1} + \varepsilon_{\perp 2}\right)\left(\frac{\partial\psi}{\partial x}\right)^2 \right\} dx + 2\gamma_d\alpha_d^2 \quad \text{Equation (7)}$$

As the initial state, E = 0 is introduced to equation (7),

$$\left(\frac{\partial\psi}{\partial x}\right)^2 = 0$$

$$F = \int_0^d \left\{ \frac{B}{2}\left(\frac{\partial\phi}{\partial x}\right)^2 - D\frac{\partial\phi}{\partial x} \right\} dx + 2\gamma_d\alpha_d^2 \quad \text{Equation (8)}$$

here, the preferred direction angle $d_d$ is set to z-direction, and viscous elastic constant D can be expressed as;

$$D = \frac{\eta}{2}\left(\frac{\partial\phi}{\partial x}\right)^2 \quad \text{Equation (9)}$$

To minimize F;

$$\frac{B}{2}\left(\frac{\partial\phi}{\partial x}\right)^2 = D\frac{\partial\phi}{\partial x} \quad \text{Equation (10)}$$

$$\alpha_d = 0 \quad \text{Equation (11)}$$

Therefore, it is clear that the PSS-LC molecule should be parallel to z-direction shown in Fig. 5. Also the equation (10) leads to the condition that the PSS-LC molecules need to stack from the bottom to top surfaces in uniform to meet with the specific Smectic layer elastic constant and liquid crystal molecular viscosity in the same layer.

As described above, the intrinsic concept of the present invention is based on the enhancement of Smectic

liquid crystal molecular director, which has a tilt angle from Smectic layer normal, along with set alignment direction such as buffing direction. Using a certain category of Smectic liquid crystal molecules whose molecular directors have a tilt angle to the Smectic layer normal as a bulk shape, the enhancement of molecular director alignment forces the Smectic liquid crystal molecular directors along with pre-set alignment direction. This enhancement enables the Smectic liquid crystal molecular directors to align perpendicular to the Smectic layer.

The unique electro-optical performance of the PSS-LCD is created by this specific molecular alignment of the Smectic liquid crystal molecules. One of these unique characteristic properties of the PSS-LCDs is its relationship between a panel gap and drive voltage. Most of known LCDs need higher drive voltage by increasing their panel gap. Because of increase of panel gap, the required applied voltage needs to be increased to keep the strength of the electric field.

In the PSS-LCD, however, sometimes needs less voltage, when the panel gap increases. Due to requirement of strong azimuthal anchoring energy at the PSS-LCD panel, increase in panel gap provides weakening of anchoring in the liquid crystal molecules in the panel, resulting in lower voltage for the driving. This fact is also one of the proofs of the above described interpretation of the PSS-LCDs.

(Practical method to enhance Coulomb-Coulomb interaction)

Because of existence of a layer structure of the Smectic liquid crystals, a specific balance between the layer structure and the alignment interface is always of great concern in terms of a clean molecular alignment. In particular the case of the PSS-LCD which requires strong azimuthal anchoring energy, how the strong anchoring energy is given to the liquid crystal molecules without disturbing their native layer structure is the most important.

As discussed theoretically in previous section, strong azimuthal anchoring is the most necessary to realize the PSS-LCD configuration. The inventors had experimental efforts to find out the practical method to give rise the strong anchoring energy without disturbing the formation of the native liquid crystal layer structure. In the course of the experimental efforts, it has been found that emphasizing some specific liquid crystal molecules out of the total PSS-LC mixture is one of the effective methods to provide strong enough anchoring energy in accordance with forming the layer structure. Due to the strong self-formation power of the layer structure in Smectic liquid crystals, it was not easy to give rise strong enough anchoring energy. If the surface anchoring is too strong, the formed layer structure of the Smectic liquid crystals is distorted, or in the worst case, destroyed. Prioritizing the clean layer structure always results in failure of the PSS-LC molecular alignment that could not form the Smectic liquid crystal molecular n-director alignment is normal to the layer. The most important to obtain clean molecular alignment in the PSS-LCD is to provide strong azimuthal anchoring energy with weak adhesive anchoring energy to the liquid crystal molecules.

(Desirable embodiment of the present invention)

The core concept of the present invention is to emphasize initial molecular n-director normal to the Smectic liquid crystal layer. The role of this surface emphasis is to provide strong enough Coulomb-Coulomb interaction between the PSS liquid crystal molecules and the specific surface in terms of giving rise to azimuthal anchoring and keeping relatively weak polar anchoring to the PSS liquid crystal molecules.

As described above, the most intrinsic requirement of the present invention is followings:

(2) Use the specific Smectic liquid crystal materials whose molecular n-directors have some tilt angle from their Smectic layer normal illustrated in Fig. 6.

(3) Those Smectic liquid crystals belong to Smectic C, Smectic H, Smectic I phases and other least symmetrical molecular structure phase group. Chiral Smectic C, chiral Smectic H, Chiral Smectic I phases also satisfy the necessary criteria for the PSS-LCD performance as described in US patent application US-2004/0196428 A1.

(4) Applying strong azimuthal anchoring as well as weaker polar anchoring energy, the natural n-director tilt from the Smectic layer normal is forced to be layer normal. As the result of this function, the PSS liquid crystal materials must show following phase sequence:

Isotropic - (Nematic) - Smectic A - PSS phase -
(Smectic ×) - Crystal.

Here, the blanket "( )" means not always necessary.

(5) As the result of above function, the aligned PSS-LC cell shows a small anisotropy of dielectric constant such as less than 10, more preferably less than 5, most preferably less than 2. The anisotropy of dielectric constant is a

function of measured frequency in the PSS-LCD. Due to the use of quadra-pole momentum unlike dipole-momentum for most of conventional LCDs, the anisotropy of dielectric constant is dependent on frequency of the prove voltage. Here the preferable value of the anisotropy of dielectric constant should be measured at 1 kHz of rectangular waveform.

(6) The prepared PSS-LCD cell satisfying above conditions shows specific direction of molecular tilt dependent on the direction of externally applied electric field. Due to the quadra-pole coupling, the PSS-LC molecule tells difference of the direction of applied electric field. This is one of the very different characteristic properties of the PSS-LCD. All of conventional nematic base LCDs using birefringence mode utilize dipole-momentum coupling, therefore, they do not tell the difference of the direction of applied electric field. Only the difference in potential of applied voltage drives those LCDs. The PSS-LCD molecules change their tilt direction by detecting the direction of applied voltage, although they do not have spontaneous polarization. This is also one of the supporting theories of quadra-pole momentum base drive of the PSS-LCD.

(Addition of molecular alignment-enhancing agent)

The major function of the features according to the present invention may preferably be the following.

As described the theoretical background above, the molecular alignment enhancement agent works as go-between at the top surface of the alignment layer. Due to the least symmetrical molecular structures of the PSS molecules, it is not so easy to obtain clean molecular alignment, in particular taking specific balance between azimuthal molecular alignment and Smectic layer forming. A good miscibility medium with these Smectic liquid crystal mixtures keeps a single mixture at a bulk mixture. Once, the mixture is filled in an LCD cell, and meet with surface of alignment layer, the medium is selectively anchored at the top surface of the alignment layer. Because of native easy anchoring molecular structure of the medium agent, the easy anchored molecules enhance molecular alignment of the Smectic liquid crystals along with the medium agent. Therefore major function of the medium agent is some sort of an alignment instructor. The strong anchored agent promotes ordered alignment of the Smectic liquid crystal molecules.

This situation can be confirmed by careful measurement of specific dielectric constant (ε) of the PSS-LCD cell. Because of a layered structure stacking on the alignment layer, which is formed parallel to the substrates illustrated in Fig. 7, each layer shows its unique dielectric response to the specific range of applied electric field frequency. Fig. 8 shows an actual measured result of the PSS-LCD panel adopted the present invention. At the low frequency region such as low tens Hz, the surface anchored agent could response partially to the prove voltage for the ε measurement. Most of Smectic liquid crystals above the agent molecules could fully response. Thus, this low tens Hz frequency region has a large capacitance. By increase of frequency such as several hundreds Hz, gradually the surface anchored agent molecules become difficult to respond. Still most of Smectic liquid crystal molecules could respond in full, therefore, the total ε of the cell shows some reduction compared to lower frequency region. Further increase in frequency provides more restricted response of the Smectic liquid crystal molecules, resulting in further reduction in ε. Without using the alignment enhancement agent, we still observe similar dispersion in ε. However, without the agent, the ε reduction between the low tens Hz and several hundreds Hz is much smaller and not clear compared to that with the agent. The observed reduction in ε without the agent is provided somewhat continuous reduction due to no existence of clear anchoring layer in the liquid crystal layer. On the other hand, with the agent, due to the existence of clear anchoring layer, this reduction in ε in the function of frequency is just like the first order phase change, which means very clear reduction in the ε. Fig. 8 shows actual measured result of a PSS-LCD cell. As shown in Fig. 8, sharp reduction between 300 Hz and 700 Hz is clearly observed. Theε reduction between 7 KHz and 10 KHz is due to the restricted response by low prove voltage of the Smectic liquid crystal. In contrast, Fig. 9 shows the Smectic liquid crystal mixture cell without using the agent. Other cell condition is exactly same. Only difference between these two cells is with or without the agent. It is obvious that non-agent cell shown in Fig. 9 has continuous reduction to the log-scale frequency without showing clear change around 1 KHz. Figs. 8 and 9 clearly suggests that the agent works as an agent for enhancement of liquid crystal molecular alignment. Therefore, the effect of the present invention, which is molecular alignment enhancement by the agent, can be confirmed by the frequency dependence of specific dielectric constant (ε). A clear criterion of the present invention is detected and confirmed by the existence of clear reduction in e between 500 Hz and 1 KHz under the specific measurement condition using +/- 1V: rectangular waveform prove voltage.

Hereinbelow, the present invention will be described in more detail with reference to specific Examples.

Examples

Example 1

**(Present invention)**

Home made Smectic C phase liquid crystal mixture material was prepared. The major molecular structures of the mixture are followings:

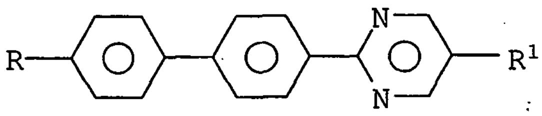

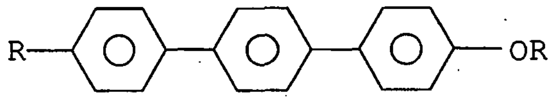

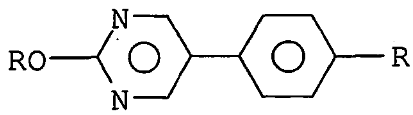

The prepared non-spontaneous polarization Smectic liquid crystal mixture was doped with 3wt% of the following molecular structure material. This total mixture is filled with the sample panel prepared as described bellow.

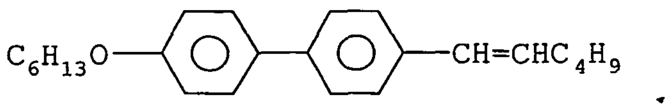

This particular doped material was prepared by following synthetic scheme.

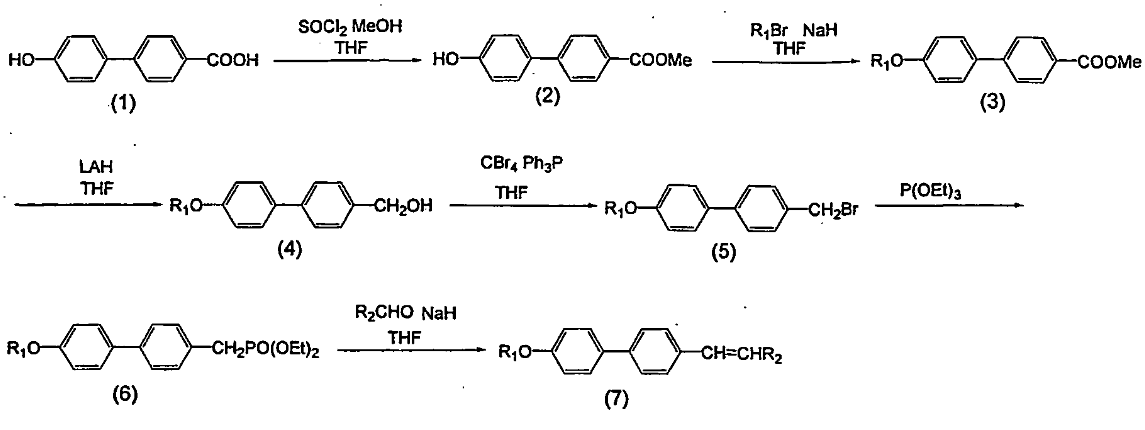


After the mixing, the phase sequence of the mixture was measured as bulk material by using "hot stage" (type: HCS 206) manufactured by Instec: Colorado corporation, and the polarized microscope manufactured by Nikon: Japanese corporation. The mixture shows Smectic C phase at the room temperature as a bulk shape. The Smectic C phase shows molecular director tilt from the Smectic layer normal, so that the extinction angle under the closed Nicole has some tilt from the layer normal.

Isotropic to Nematic: 89 deg.C, Nematic to Smectic A: 79 deg.C, Smectic A to Smectic C: 75 deg.C, Smectic C to Crystal: 14 deg.C. This mixture was filled with the sample panel prepared as following.

For liquid crystal molecular alignment material, RN-1199 (Nissan Chemicals Industries) was used as less than 1.5 degrees of molecular pre-tilt angle alignment material. Thickness of the alignment layer as cured layer was set at 700 A. The surface of this cured alignment layer was buffed by Rayon cloth in the direction of 30 degrees to center line of the substrate shown in Fig. 10. The contact length of the buffing cloth was set at 0.5 mm in both substrates of top and bottom. Two buffed substrates were laminated with their buffing directions were parallel each other using silicon dioxide spacer balls with average diameter of 1.6 $\mu$m. Obtained panel gap as measured by using optical multiple reflection-was 1.9 $\mu$m. The above liquid crystal mixture was filled into the prepared panel at the isotropic phase temperature of 105 degree C. After the panel was filled with the mixture, ambient temperature was controlled to reduce 2 degrees C per minute till the mixture showed the PSS phase near room temperature, which was 38 degrees C. Then, by natural cooling without control, after the panel temperature reached at room temperature, the panel was applied +/- 10 V, 500 Hz of triangular waveform voltage, 5 minutes. After 5 minutes voltage application, the panel was chipped off its liquid crystal fill hole.

The completed panel was measured its phase sequence under the polarized microscope (Nikon) and Hot stage (Instec: type HCS 206). First, the panel temperature was increased up to 105 degrees C by the Hot stage, then, the temperature was reduced at the rate of 1.5 degrees C per minute. The panel showed phase transition from Isotropic to Nematic at 89 deg.C; Nematic to Smectic A at 77.2 deg.C; Smectic A to PSS at 71.1 deg.C; and PSS to Crystal at 4 deg.C. These different phase transition temperatures between bulk and panel were interpreted by super-cooling effect, which is widely observed phenomenon due to slow cooling rate. The distinguished fact is this panel satisfied with the PSS-LCD condition shows same extinction angle between Smectic A and the PSS phase. This is the specific characteristic property of the PSS-LCD.

This panel was also measured its anisotropy of dielectric constant using Precision LCR meter (Agilent: type 4774) under the DC bias voltage of 6 V. The prove voltage of +/- 1 V; 1 kHz; rectangular waveform voltage was used. The measured anisotropy of dielectric constant was 2.5. This value is almost one third of averaged conventional LCDs. Therefore, this PSS-LCD panel provides much wider drive capability window compared to conventional LCDs.

The electro-optical measurement of this panel showed analog gray scale by application of triangular waveform voltage as shown in Fig. 11. The most significant fact in terms of the effect of the present invention to the Smectic liquid crystal materials as bulk is that the invented liquid crystal molecular alignment effectively prevents the molecular directors from tilting to buffed angle at the PSS phase. This prevention of the molecular tilt at the Smectic C phase as a bulk is the intrinsic effect of the present invention. By preventing the molecular tilt under the certain panel condition, the analog gray scale with conventional liquid crystal driving method is enabled to show its superior performance.

<u>Example 2</u>

**(Control)**

Using commercially available two-bottle system FLC mixture material

(Merck:ZLI-4851-000 and ZLI-4851-100), and opposite chirality material with those FLC mixture, almost zero-spontaneous polarization mixture was prepared. The prepared mixture contains 75wt% of ZLI-4851-000, 20wt% of ZLI-4851-100, and 5wt% of opposite chirality material. For liquid crystal molecular alignment material, RN-1199 (Nissan Chemicals Industries) was used as 1 to 1.5 degrees of pre-tilt angle alignment material. Thickness of the alignment layer as cured layer was set at 1,000A to 1,200A. The surface of this cured alignment layer was buffed by Rayon cloth in the direction of 30 degrees to center line of the substrate. The contact length of the buffing was set to 0.4 mm at both substrates. Silicon dioxide balls with average diameter of 1.6 $\mu$m are used as spacers. Obtained panel gap as measured was 1.8 $\mu$m. The above mixed material was injected into the panel at the isotropic phase temperature of 110 deg.C. After the mixed material was filled, ambient temperature was controlled to reduce 2 deg.C per minute till the mixed material showed ferroelectric phase (40 deg.C). Then by natural cooling, after the panel reached at room temperature, the panel was applied +/- 10 V, 500 Hz of triangular waveform, 10 minutes. The initial molecular alignment direction of this panel was partially tilted right direction from buffing direction at the top view of the panel, partially tilted left direction from the buffing direction. The tilt angle from the buffed angle was 21.6 degs. from the buffed direction in both sides.

Due to the molecular tilt from the buffed direction, this panel did not show the analog gray shades observed in the PSS-LCD panel.

Example 3

**(Control)**

Home made Smectic C phase liquid crystal mixture material was prepared. The major molecular structures of the mixture are followings:

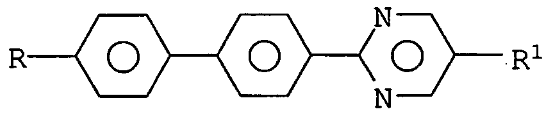

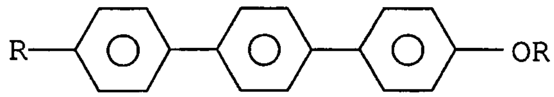

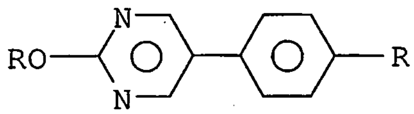

The phase sequence of the mixture was measured as bulk material by using "hot stage" (type: HCS 206) manufactured by Instec: Colorado corporation, and the polarized microscope manufactured by Nikon: Japanese corporation. The mixture shows Smectic C phase at the room temperature as a bulk shape. The Smectic C phase shows molecular director tilt from the Smectic layer normal, so that the extinction angle under the closed Nicole has some tilt from the layer normal.

Isotropic to Nematic: 92 deg.C, Nematic to Smectic A: 83 deg.C, Smectic A to Smectic C: 79 deg.C, Smectic C to Crystal: 13 deg.C. This mixture was filled with the sample panel prepared as following.

For liquid crystal molecular alignment material, RN-1199 (Nissan Chemicals Industries) was used as less than 1.5 degrees of molecular pre-tilt angle alignment material. Thickness of the alignment layer as cured layer was set at 700 A. The surface of this cured alignment layer was buffed by Rayon cloth in the direction of 30 degrees to center line of the substrate shown in Fig. 10. The contact length of the buffing cloth was set at 0.5 mm in both substrates of top and bottom. Two buffed substrates were laminated with their buffing directions were parallel each other using silicon dioxide spacer balls with average diameter of 1.6 $\mu$m. Obtained panel gap as measured by using optical multiple reflection was 1.9 $\mu$m. The above liquid crystal mixture was filled into the prepared panel at the isotropic phase temperature of 105 degree C. After the panel was filled with the mixture, ambient temperature was controlled to reduce 2 degrees C per minute till the mixture showed the PSS phase near room temperature, which was 38 degrees C. Then, by natural cooling without control, after the panel temperature reached at room temperature, the panel was applied +/- 10 V, 500 Hz of triangular waveform voltage, 5 minutes. After 5 minutes voltage application, the panel was chipped off its liquid crystal fill hole.

The completed panel was measured its phase sequence under the polarized microscope (Nikon) and Hot stage (Instec: type HCS 206). First, the panel temperature was increased up to 105 degrees C by the Hot stage, then, the temperature was reduced at the rate of 1.5 degrees C per minute. The panel showed phase transition from Isotropic to Nematic at 90.5 deg.C; Nematic to Smectic A at 80.8 deg.C; Smectic A to PSS at 72.3 deg.C; and PSS to Crystal at 4 deg.C. These different phase transition temperatures between bulk and panel were interpreted by super-cooling effect, which is widely observed phenomenon due to slow cooling rate. The distinguished fact is this panel satisfied with the PSS-LCD condition shows same extinction angle between Smectic A and the PSS phase. This is the specific characteristic property of the PSS-LCD.

This panel was also measured its anisotropy of dielectric constant using Precision LCR meter (Agilent: type 4774) under the DC bias voltage of 6 V. The prove voltage of +/- 1 V; 1 kHz; rectangular waveform voltage was used. The measured anisotropy of dielectric constant was 2.5. This value is almost one third of averaged conventional LCDs. Therefore, this PSS-LCD panel provides much wider drive capability window compared to conventional LCDs.

The electro-optical measurement of this panel showed analog gray scale by application of triangular waveform voltage as shown in Fig. 12. Compared to the result in Example 1, contrast ratio of the panel is inferior to that in Example

1. Table 2 compares contrast ratio of panels. The contrast ratio of the panel at this example is 190:1, the contrast ratio at the Example 1 is 360:1. This inferiority in contrast ration is due to variation of extinction angle at small domain area. This variation of the local extinction angle is due to not strong enough azimuthal anchoring energy of this example. Unlike this example, the case in Example 1 using alignment enhancement agent, the local variation in extinction angle is effectively eliminated, resulting in higher contrast ratio.

Table 2. Difference in contrast ratio

| | Contrast ratio |
|---|---|
| 5.1 (invention) | 360:1 |
| 5.2 (control) | 11:1 |
| 5.3 (control) | 190:1 |
| 5.4 (invention) | 310:1 |

Example 4

(Present invention)

Using in-house prepared Smectic C phase liquid crystal materials composed of following major structure of liquid crystal materials, the effect of the present invention was investigated.

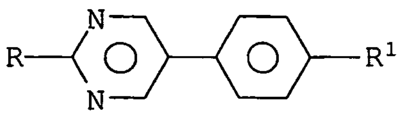

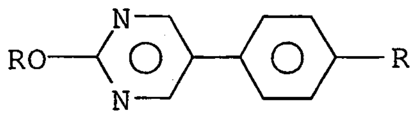

The used molecular alignment enhancement material is shown its molecular formula as following.

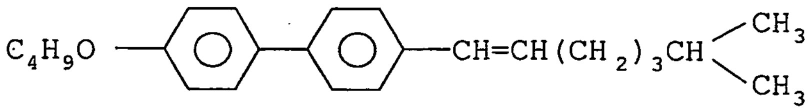

The molecular alignment enhanced material is mixed at 2 wt% of the Smectic C phase liquid crystal mixture. This total mixture including the enhanced material does not show any chirarity, because the mixture does not contain any chiral material. This mixture shows the phase sequence of Isotropic, Smectic A, Smectic C and Crystal as a bulk material.

After the mixing, the phase sequence of the mixture was measured as bulk material by using "hot stage" (type: HCS 206) manufactured by Instec: Colorado corporation, and the polarized microscope manufactured by Nikon: Japanese corporation. The mixture shows Smectic C phase at the room temperature as a bulk shape. The Smectic C phase shows molecular director tilt from the Smectic layer normal, so that the extinction angle under the closed Nicole has some tilt from the layer normal.

Isotropic to Smectic A: 77 deg.C, Smectic A to Smectic C: 71 deg.C, Smectic C to Crustal: -10 deg.C. This mixture was filled with the sample panel prepared as following. For liquid crystal molecular alignment material, RN-1175 (Nissan Chemicals Industries) was used as less than 1.0 degrees of molecular pre-tilt angle alignment material. Thickness of the alignment layer as cured layer was set at 600 A. The surface of this cured alignment layer was buffed by Rayon cloth in the direction of 30 degrees to center line of the substrate shown in Fig. 10. The contact length of the buffing cloth was set at 0.4 mm in both substrates of top and bottom. Two buffed substrates were laminated with their buffing directions were parallel each other using silicon dioxide spacer balls with average diameter of 1.6 μm. Obtained panel gap as measured by using optical multiple reflection was 1.9 μm. The above liquid crystal mixture was filled into the

prepared panel at the isotropic phase temperature of 100 degree C. After the panel was filled with the mixture, ambient temperature was controlled to reduce 2 degrees C per minute till the mixture showed the PSS phase near room temperature, which was 38 degrees C. Then, by natural cooling without control, after the panel temperature reached at room temperature, the panel was applied +/- 10 V, 500 Hz of triangular waveform voltage, 5 minutes. After 5 minutes voltage application, the panel was chipped off its liquid crystal fill hole.

The completed panel was measured its phase sequence under the polarized microscope (Nikon) and Hot stage (Instec: type HCS 206). First, the panel temperature was increased up to 100 degrees C by the Hot stage, then, the temperature was reduced at the rate of 1.5 degrees C per minute. The panel showed phase transition from Isotropic to Smectic A at 76 deg.C; Smectic A to PSS at 67.2 deg.C; PSS to Crystal at -14 deg.C. These different phase transition temperatures between bulk and panel were interpreted by super-cooling effect, which is widely observed phenomenon due to slow cooling rate. The distinguished fact is this panel satisfied with the PSS-LCD condition shows same extinction angle between Smectic A and the PSS phase. This is the specific characteristic property of the PSS-LCD.

This panel was also measured its anisotropy of dielectric constant using Precision LCR meter.(Agilent: type 4774) under the DC bias voltage of 6 V. The prove voltage of +/- 1 V; 1 kHz; rectangular waveform voltage was used. The measured anisotropy of dielectric constant was 1.8. This value is almost quarter of averaged conventional LCDs. Therefore, this PSS-LCD panel provides much wider drive capability window compared to conventional LCDs.

The electro-optical measurement of this panel showed analog gray scale by application of triangular waveform voltage as shown in Fig. 13. The most significant fact in terms of the effect of the present invention to the Smectic liquid crystal materials as bulk is that the invented liquid crystal molecular alignment effectively prevents the molecular directors from tilting to buffed angle at the PSS phase. This prevention of the molecular tilt at the Smectic C phase as a bulk is the intrinsic effect of the present invention. By preventing the molecular tilt under the certain panel condition, the analog gray scale with conventional liquid crystal driving method is enabled to show its superior performance.

(Comparison with conventional technology)

From above discussion and examples, in particular the discussions at section 3 and 4, and the examples, the present invention based on Polarization Shielded Smectic Liquid Crystal Displays (PSS-LCDs) makes PSS liquid crystal molecular alignment cleaner than the conventional PSS-LCD, resulting in higher manufacturing yield.

(Effect of the present invention)

The present invention enables high quality image for large screen direct view TV with fast enough optical response at inter gray scale levels with less image blur by automatic shuttering effect using most of current existing large LCD panel manufacturing equipment with proven manufacturing process. This provides cost advantage in the manufacturing. The present invention also enables small screen with high resolution LCDs using field sequential color method, in particular for the advanced cell phone application with reasonable manufacturing cost. By using RGB LED backlight for field sequential color system, wider color saturation makes higher image quality in its color reproduction. This is extremely important for digital still camera monitor display which needs natural color reproduction.

Further, as described above, the present invention was provided by analytical mechanism result and investigation of the concrete method to produce high performance LCDs with reasonable manufacturing cost by detail investigation of previously reported this Inventor's technology: PSS-LCDs. The concept of the present invention, which is a liquid crystal molecular alignment enhancement by specific agent materials, enables more practical volume manufacturing of the PSS-LCDs as well as improvement of the electro-optical performance of the panels.

## Claims

1. A liquid crystal device comprising: at least a pair of substrates; and
a liquid crystal material composition disposed between the pair of substrates,
wherein the liquid crystal material composition comprises, at least, a Smectic phase liquid crystal material, and a molecular alignment-enhancing agent;
the Smectic phase liquid crystal material has a molecular long axis or n-director having a tilt angle to its layer normal as a bulk material, and the molecular long axis of the Smectic phase liquid crystal material aligns parallel to the pre-setting alignment direction, resulting in its long axis layer normal (i.e., thereby making its molecular long axis normal to its layer); and
the molecular alignment-enhancing agent has a molecular axis or n-director having no tilt angle to its layer normal as a bulk material, and the molecular alignment-enhancing agent has a double bond structure in its molecule.

**2.** A liquid crystal device according to claim 1, wherein the molecular alignment-enhancing agent has a non-saturated carbon hydride structure in its molecular structure.

**3.** A liquid crystal device according to claim 1, wherein the molecular alignment-enhancing agent has a carbon-nitrogen double bond structure in its molecular structure.

**4.** A liquid crystal device according to claim 1, wherein the molecular alignment-enhancing agent has a carbon-carbon triple bond structure in its molecular structure.

**5.** A liquid crystal device according to claim 1, wherein the molecular alignment-enhancing agent has a nitrogen-nitrogen double bond structure in its molecular structure.

**6.** A liquid crystal material composition, comprising, at least, a Smectic phase liquid crystal material, and a molecular alignment-enhancing agent;
wherein the Smectic phase liquid crystal material has a molecular long axis or n-director having a tilt angle to its layer normal as a bulk material, and the molecular long axis of the Smectic phase liquid crystal material aligns parallel to the pre-setting alignment direction, resulting in its long axis layer normal; and
the molecular alignment-enhancing agent has a molecular axis or n-director having no tilt angle to its layer normal as a bulk material, and the molecular alignment-enhancing agent has a double bond structure in its molecule.

**Patentansprüche**

**1.** Flüssigkristalleinheit, umfassend: mindestens ein Paar von Substraten; und
eine Flüssigkristallmaterialzusammensetzung, die zwischen dem Paar von Substraten angeordnet ist,
worin die Flüssigkristallmaterialzusammensetzung mindestens ein eine smektische Phase aufweisendes Flüssigkristallmaterial, und ein Mittel zur Erhöhung der molekularen Ausrichtung umfasst,
worin das smektische Phase aufweisende Flüssigkristallmaterial eine molekulare Längsachse oder n-Direktor aufweist, das als ein Grundmaterial einen Neigungswinkel zu seiner Schichtennormale aufweist, und worin die molekulare Längsachse des smektische Phase aufweisenden Flüssigkristallmaterials sich parallel zu der voreingestellten Ausrichtungsrichtung ausrichtet, was zu seiner Längsachsen-Schichtennormale (das heißt, **dadurch** wird seine Längsachse normal zu seiner Schicht) führt, und
worin das Mittel zur Erhöhung der molekularen Ausrichtung eine/n molekulare Achse oder n-Direktor aufweist, das als ein Grundmaterial keinen Neigungswinkel zu seiner Schichtennormale aufweist, und worin das Mittel zur Erhöhung der molekularen Ausrichtung eine Doppelbindungsstruktur in seinem Molekül aufweist.

**2.** Flüssigkristalleinheit nach Anspruch 1, worin das Mittel zur Erhöhung der molekularen Ausrichtung eine ungesättigte Kohlenwasserstoffstruktur in dessen molekularer Struktur aufweist.

**3.** Flüssigkristalleinheit nach Anspruch 1, worin das Mittel zur Erhöhung der molekularen Ausrichtung eine Kohlenstoff-Stickstoff Doppelbindungsstruktur in dessen molekularer Struktur aufweist.

**4.** Flüssigkristalleinheit nach Anspruch 1, worin das Mittel zur Erhöhung der molekularen Ausrichtung eine Kohlenstoff-Kohlenstoff Dreifach-Bindungsstruktur in dessen molekularer Struktur aufweist.

**5.** Flüssigkristalleinheit nach Anspruch 1, worin das Mittel zur Erhöhung der molekularen Ausrichtung eine Stickstoff-Stickstoff Doppelbindungsstruktur in dessen molekularer Struktur aufweist.

**6.** Flüssigkristallmaterialzusammensetzung, umfassend: mindestens ein eine smektische Phase aufweisendes Flüssigkristallmaterial, und ein das Mittel zur Erhöhung der molekularen Ausrichtung,
worin das smektische Phase aufweisende Flüssigkristallmaterial eine/n molekulare Längsachse oder n-Direktor aufweist, das als ein Grundmaterial einen Neigungswinkel zu seiner Schichtennormale aufweist, und worin die molekulare Längsachse des smektische Phase aufweisenden Flüssigkristallmaterials sich parallel zu der voreingestellten Ausrichtungsrichtung ausrichtet, was zu seiner Längsachsen-Schichtennormale führt, und
worin das Mittel zur Erhöhung der molekularen Ausrichtung eine/n molekulare Achse oder n-Direktor aufweist, das als ein Grundmaterial keinen Neigungswinkel zu seiner Schichtennormale aufweist, und worin das Mittel zur Erhöhung der molekularen Ausrichtung eine Doppelbindungsstruktur in dessen Molekül aufweist.

## Revendications

1. Un dispositif à cristaux liquides comprenant : au moins une paire de substrats ; et
une composition de matière en cristaux liquides disposée entre la paire de substrats, dans laquelle la composition de matière en cristaux liquides comprend au moins un matériau en cristaux liquides à phase smectique et un agent de renforcement d'alignement moléculaire ;
le matériau en cristaux liquides à phase smectique comporte un axe longitudinal ou n-directeur moléculaire formant un angle d'inclinaison par rapport à sa couche normale comme matériau en vrac, et l'axe longitudinal moléculaire du matériau en cristaux liquides à phase smectique s'aligne en parallèle à la direction d'alignement de préréglage, résultant en son axe longitudinal de couche normale (c'est-à-dire faisant de la sorte son axe longitudinal moléculaire normal par rapport à sa couche) ; et
l'agent de renforcement d'alignement moléculaire comporte un axe longitudinal ou n-directeur moléculaire ne formant pas d'angle d'inclinaison par rapport à sa couche normale comme matériau en vrac et l'agent de renforcement d'alignement moléculaire comporte une structure à liaison double au sein de sa molécule.

2. Un dispositif à cristaux liquides selon la revendication 1 dans lequel l'agent de renforcement d'alignement moléculaire comporte une structure d'hydrure de carbone non saturée au sein de sa structure moléculaire.

3. Un dispositif à cristaux liquides selon la revendication 1 dans lequel l'agent de renforcement d'alignement moléculaire comporte une structure à double liaison carbone-azote au sein de sa structure moléculaire.

4. Un dispositif à cristaux liquides selon la revendication 1 dans lequel l'agent de renforcement d'alignement moléculaire comporte une structure à triple liaison carbone-carbone au sein de sa structure moléculaire.

5. Un dispositif à cristaux liquides selon la revendication 1 dans lequel l'agent de renforcement d'alignement moléculaire comporte une structure à double liaison azote-azote au sein de sa structure moléculaire.

6. Une composition de matière en cristaux liquides comprenant, au moins, un matériau en cristaux liquides à phase smectique et un agent de renforcement d'alignement moléculaire ;
dans laquelle le matériau en cristaux liquides à phase smectique comporte un axe longitudinal ou n-directeur moléculaire formant un angle d'inclinaison par rapport à sa couche normale comme matériau en vrac, et l'axe longitudinal moléculaire du matériau en cristaux liquides à phase smectique s'aligne en parallèle à la direction d'alignement de préréglage, résultant en son axe long de couche normale ; et
l'agent de renforcement d'alignement moléculaire comporte un axe longitudinal ou n-directeur moléculaire ne formant pas d'angle d'inclinaison par rapport à sa couche normale comme matériau en vrac et l'agent de renforcement d'alignement moléculaire comporte une structure à liaison double au sein de sa molécule.

Fig.1

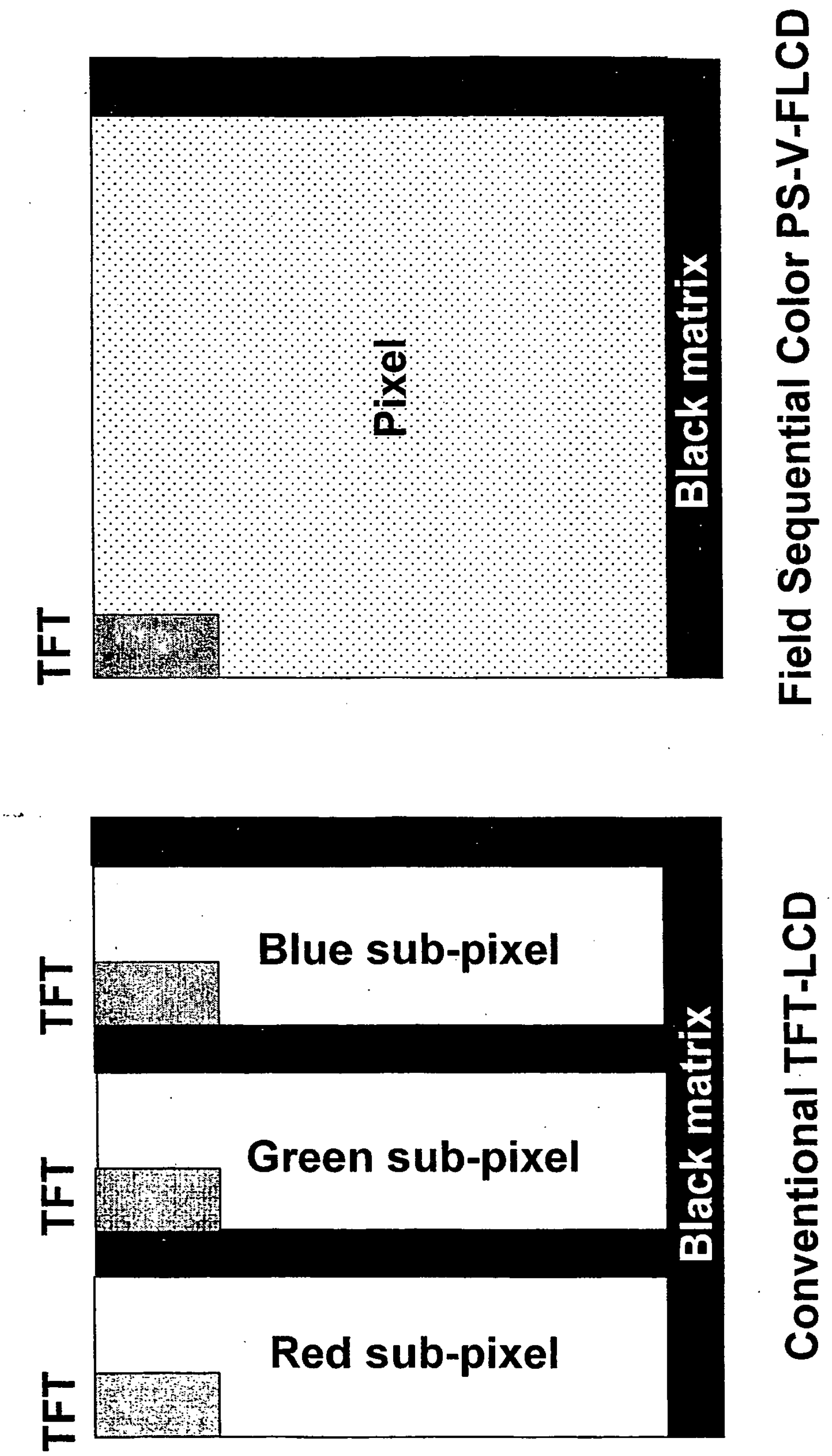


Difference in Pixel Structure

Fig.2

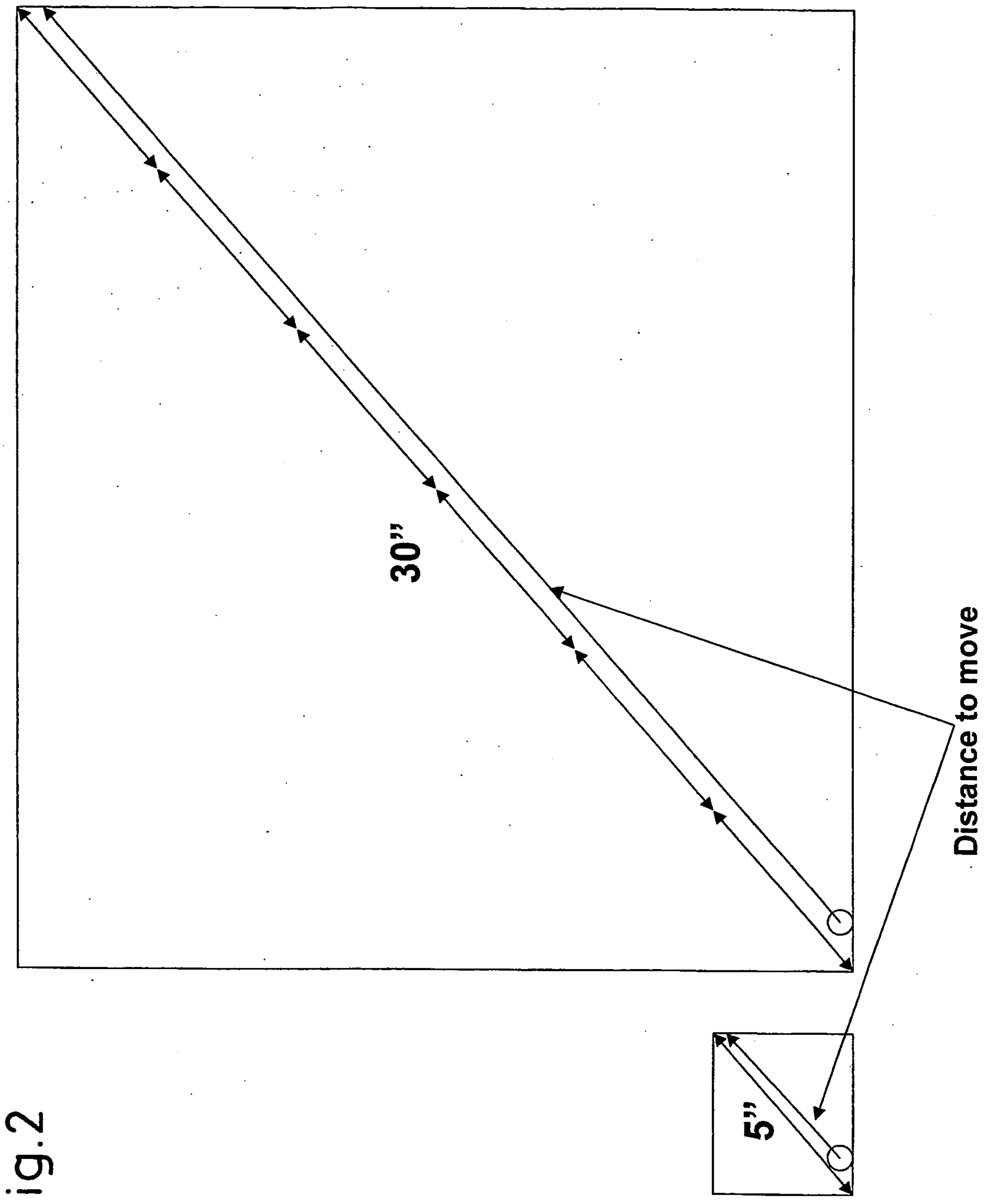

Fig.3

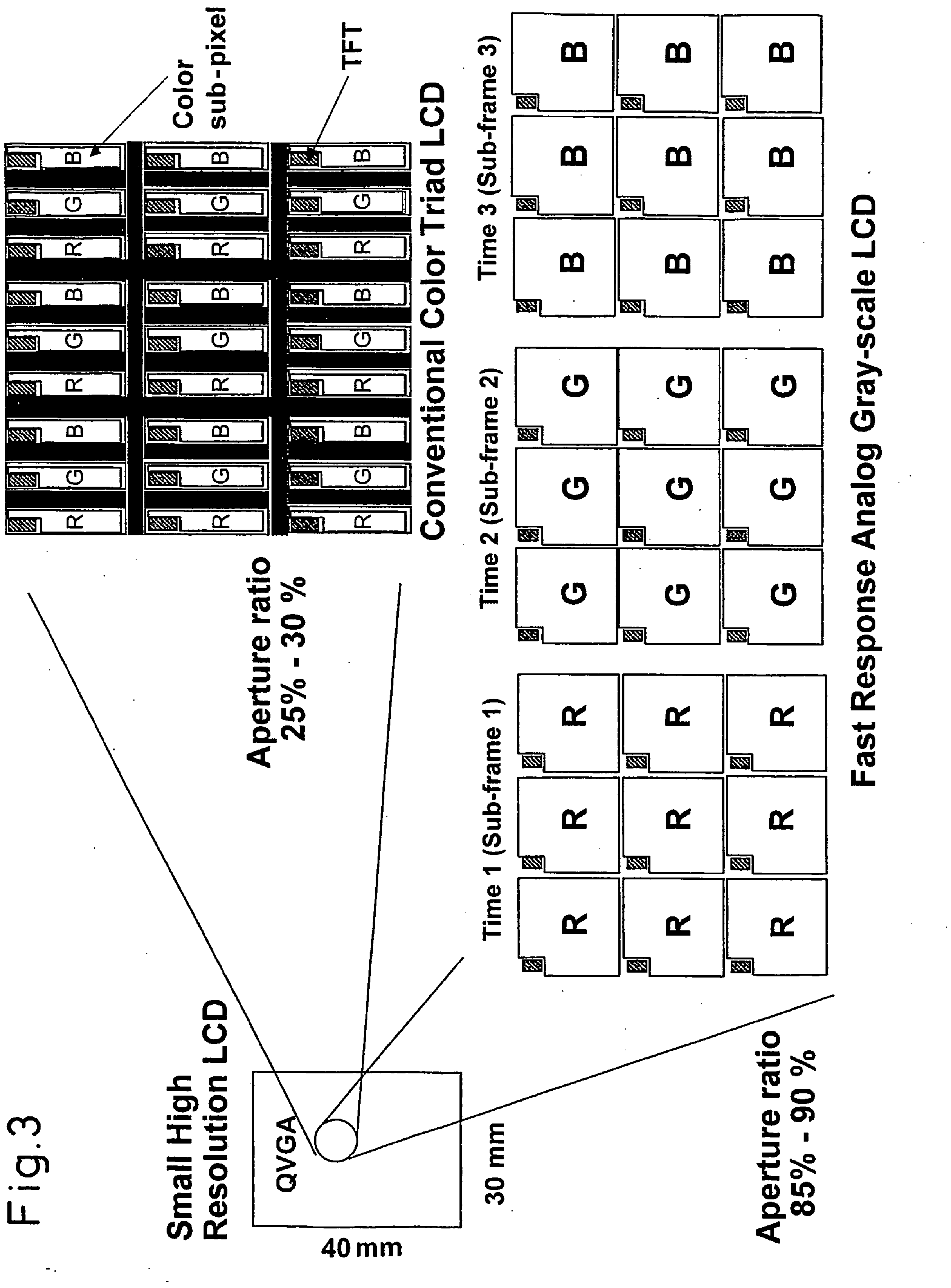
Small High Resolution LCD
QVGA
40 mm
30 mm
Aperture ratio 25% - 30 %
Conventional Color Triad LCD
Color sub-pixel
TFT
R
G
B
Aperture ratio 85% - 90 %
Time 1 (Sub-frame 1)
Time 2 (Sub-frame 2)
Time 3 (Sub-frame 3)
Fast Response Analog Gray-scale LCD

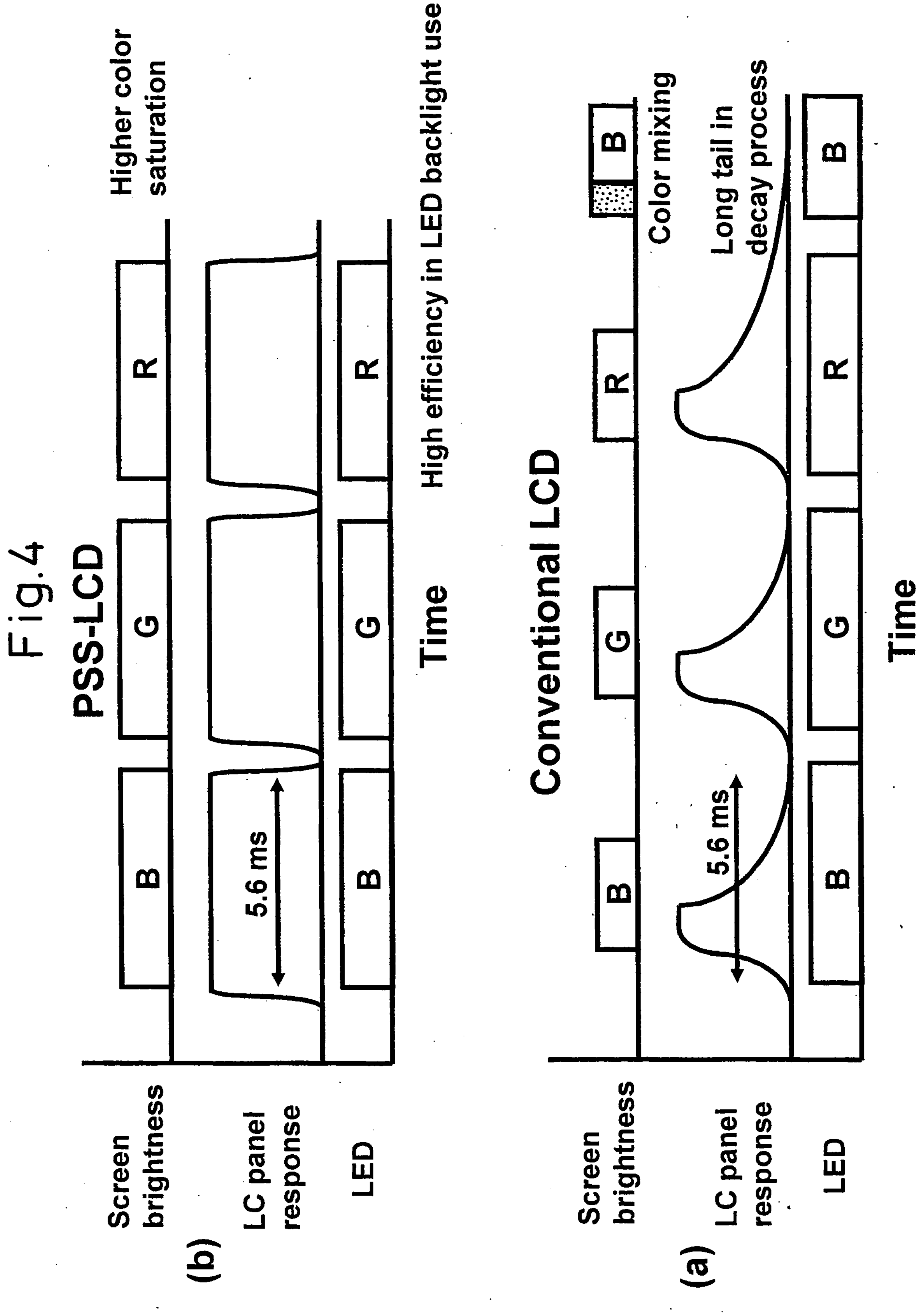

(b)
PSS-LCD
Screen brightness
LC panel response
LED
B
G
R
5.6 ms
Higher color saturation
High efficiency in LED backlight use
Time
(a)
Conventional LCD
Screen brightness
LC panel response
LED
B
G
R
5.6 ms
Color mixing
Long tail in decay process
Time


Fig.4

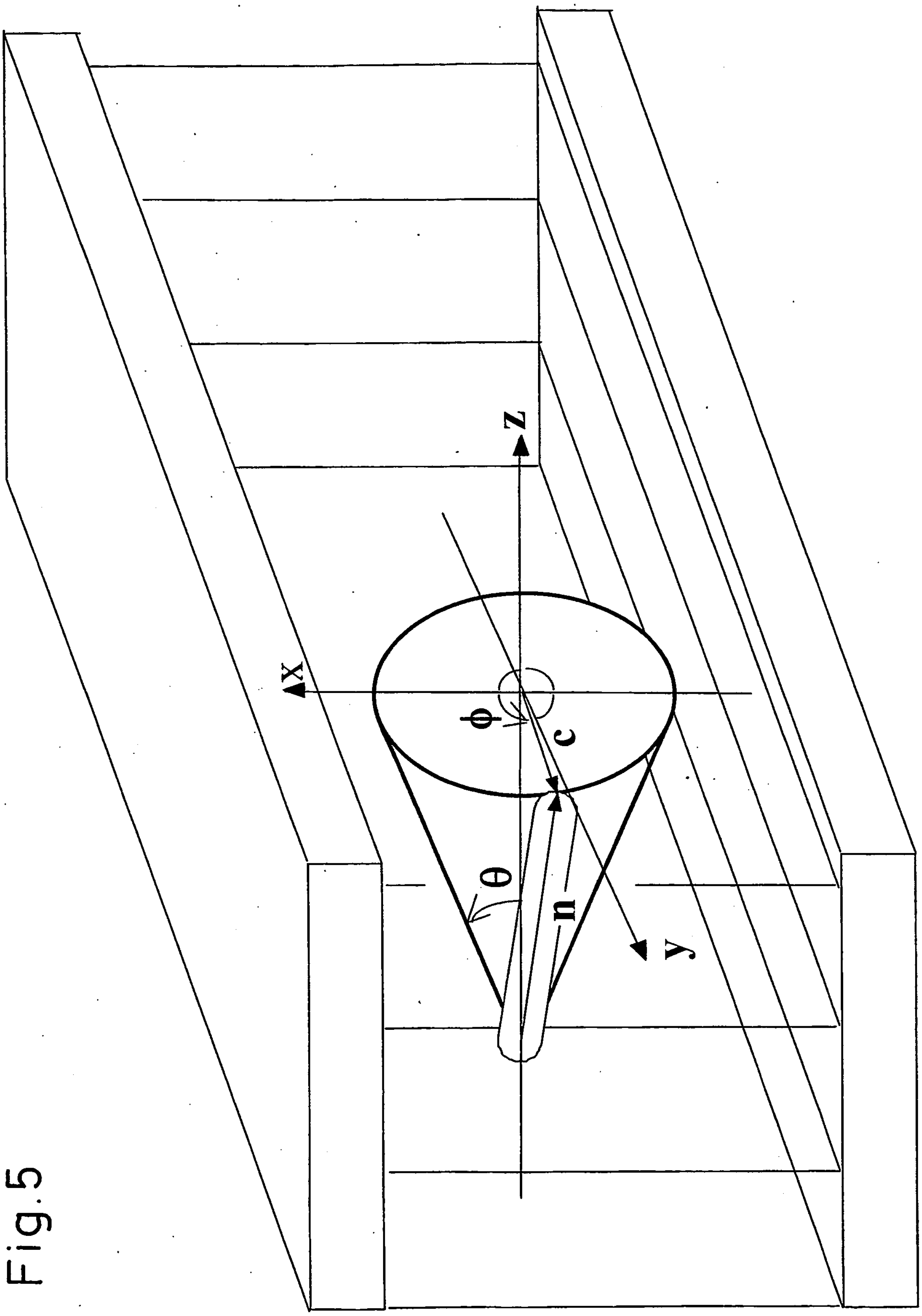


Fig.5

Fig.6

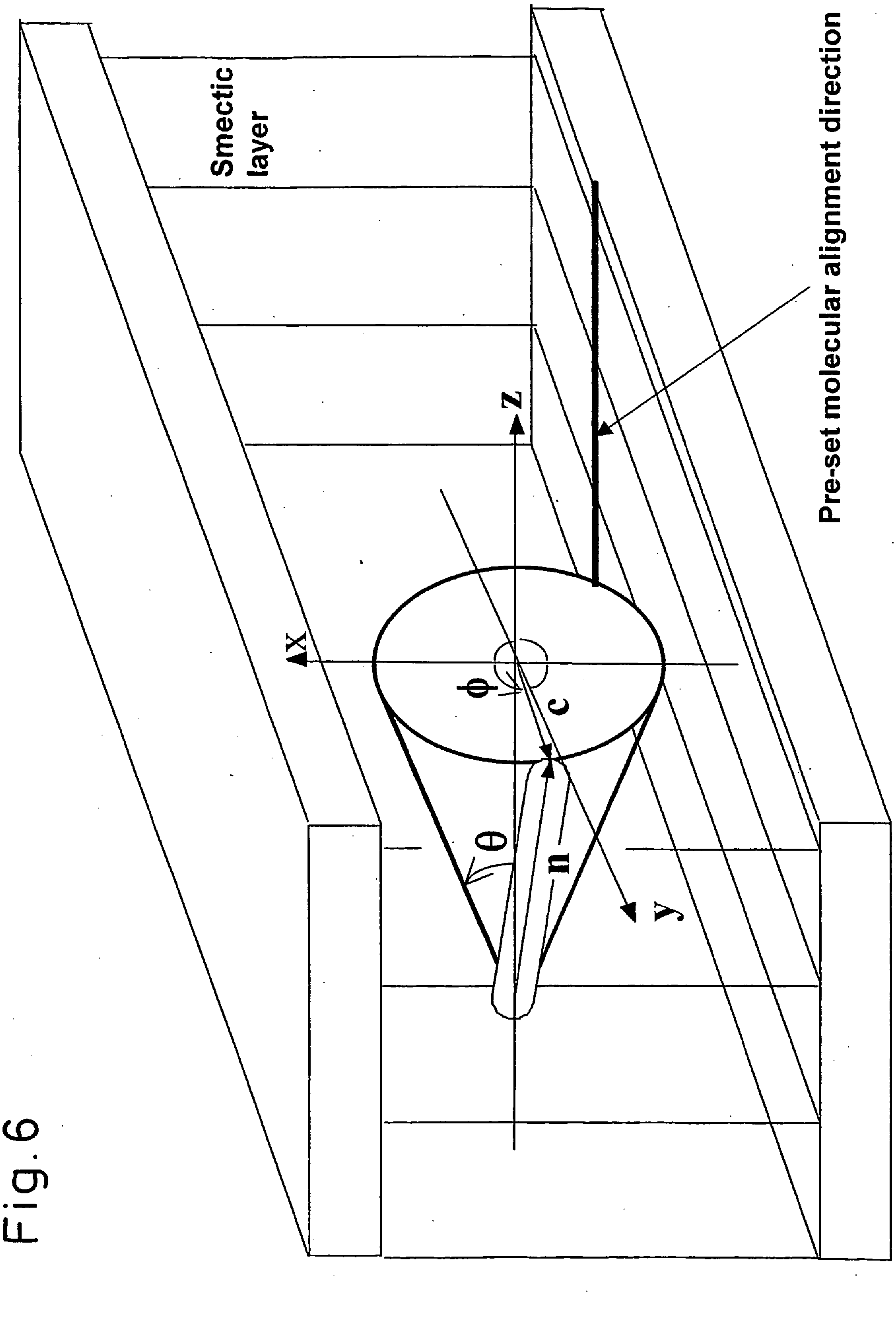
Smectic layer
Pre-set molecular alignment direction
X
Z
y
n
c
θ
φ

Fig.7

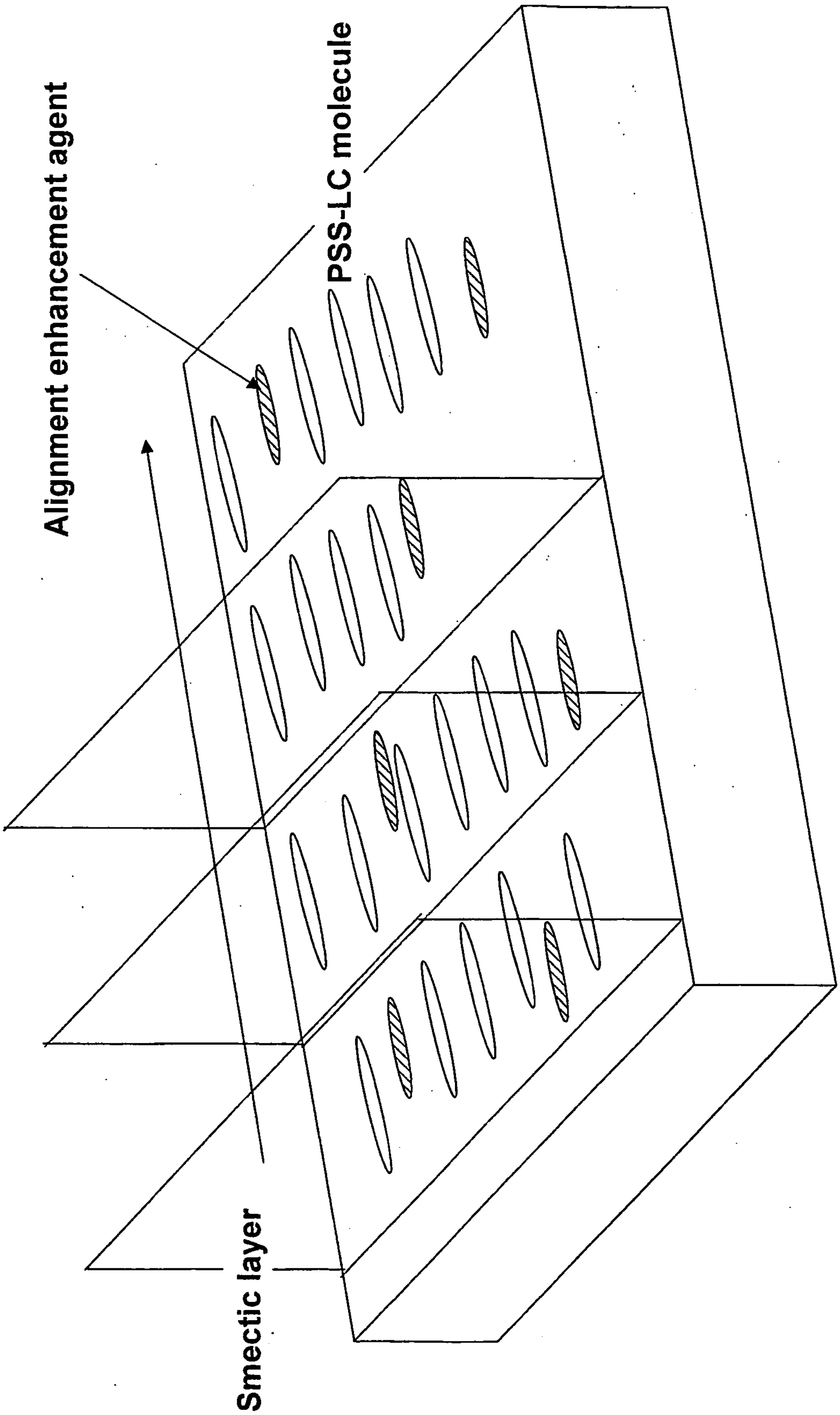
Alignment enhancement agent
PSS-LC molecule
Smectic layer

Fig.8

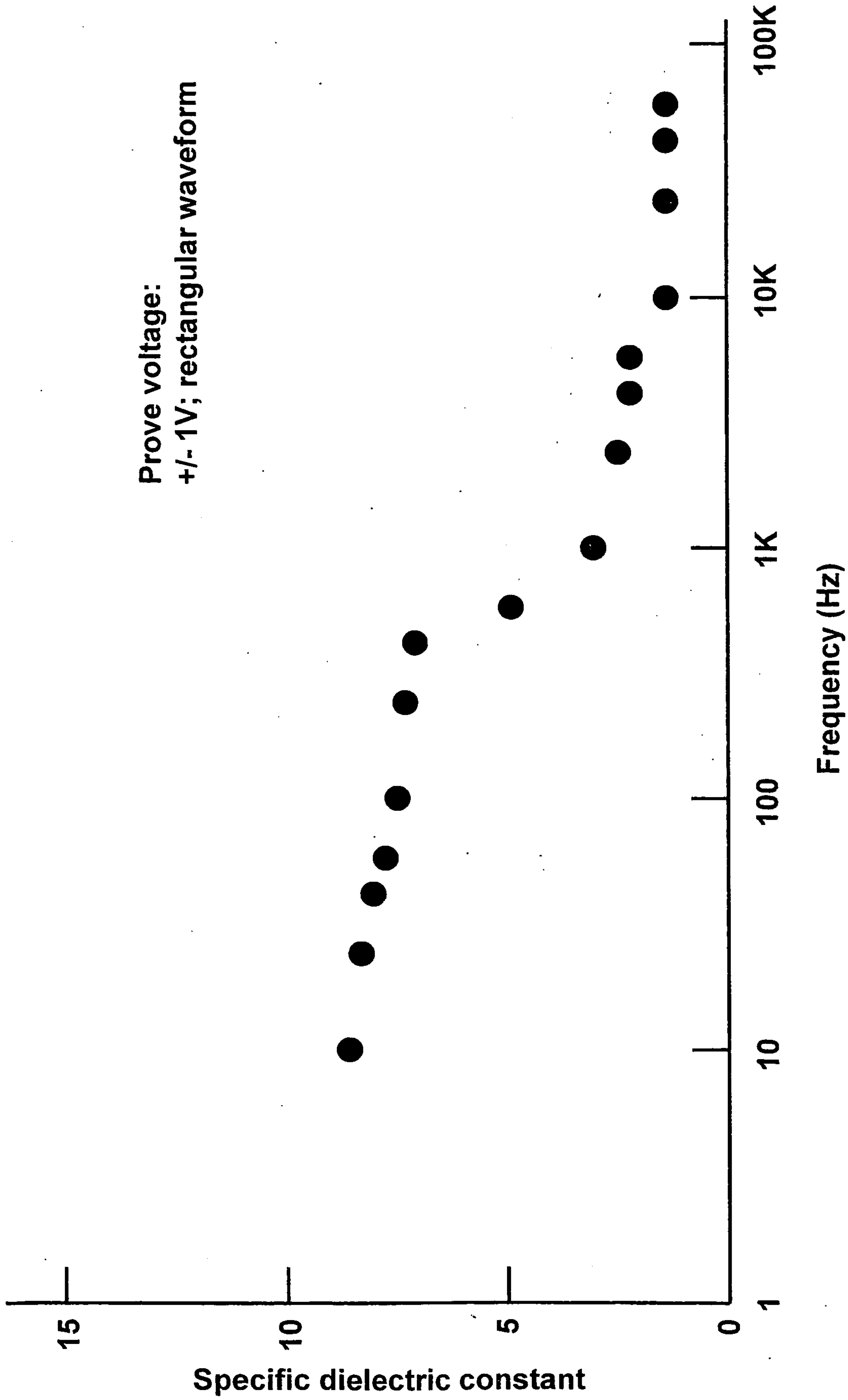
Prove voltage:
+/- 1V; rectangular waveform
Specific dielectric constant
0
5
10
15
1
10
100
1K
10K
100K
Frequency (Hz)

Fig.9

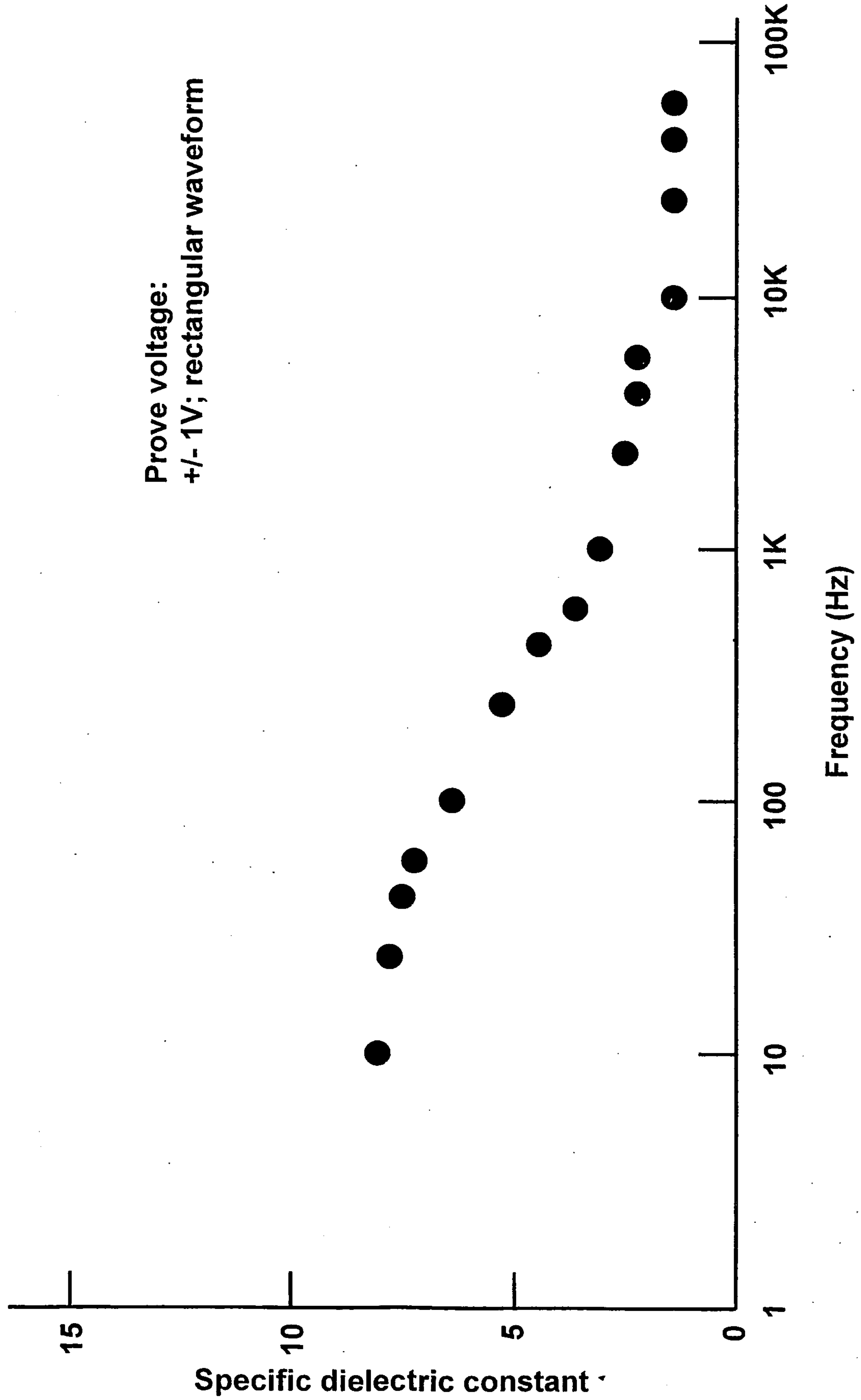
Prove voltage:
+/- 1V; rectangular waveform
15
10
5
0
Specific dielectric constant
1
10
100
1K
10K
100K
Frequency (Hz)

Fig.10

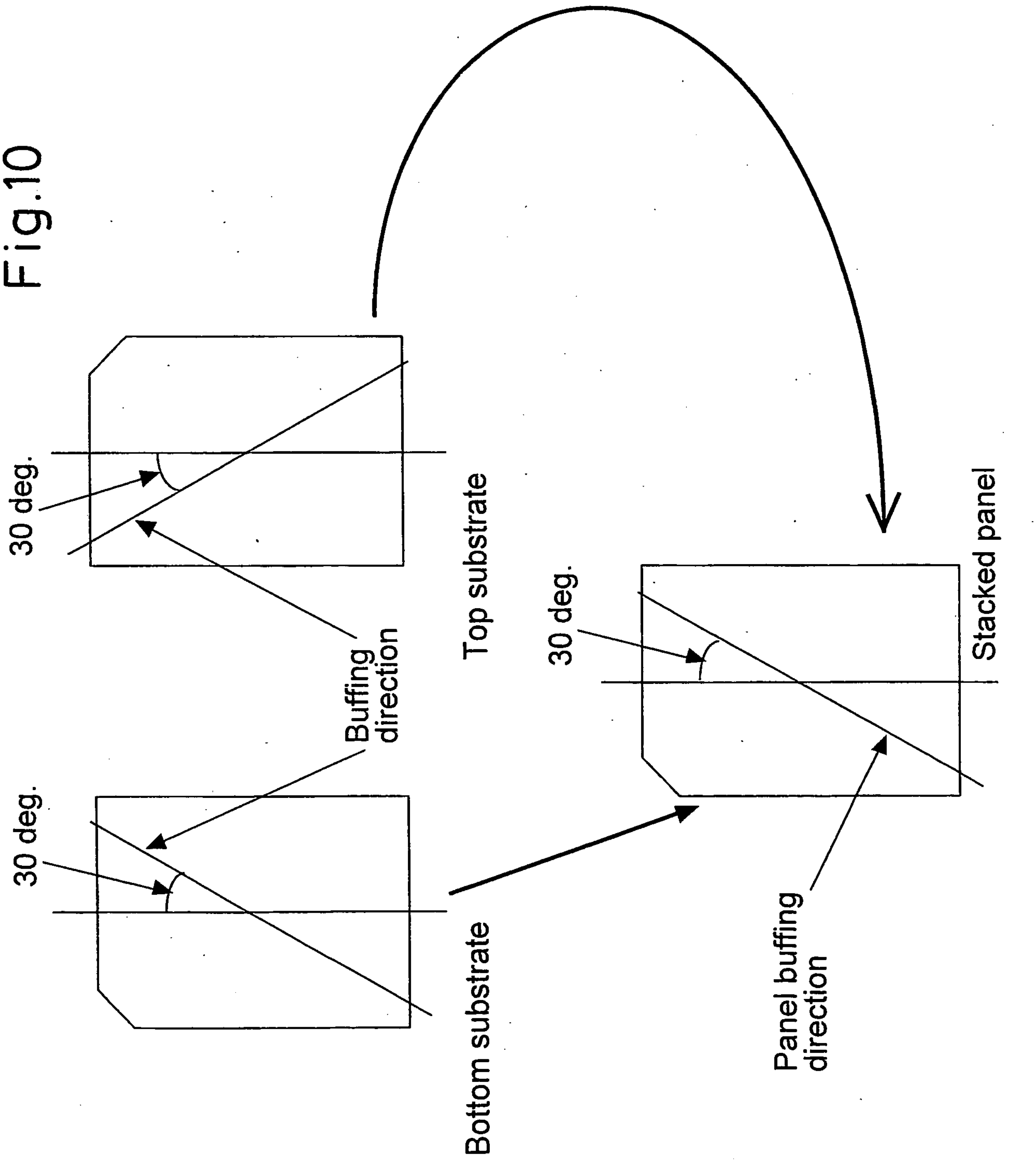
30 deg.
Buffing direction
Top substrate
30 deg.
Bottom substrate
30 deg.
Stacked panel
Panel buffing direction

Fig.11

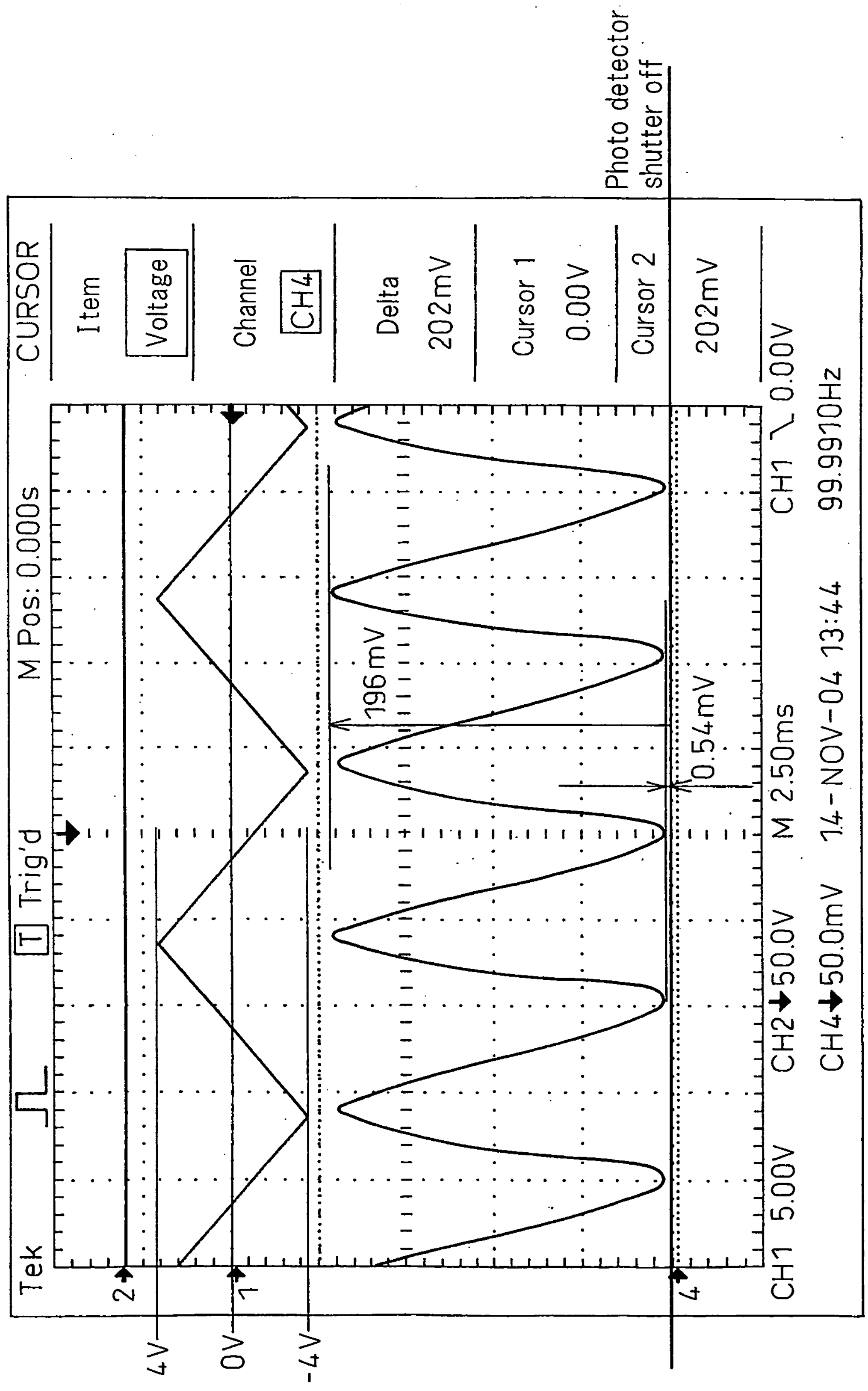
Photo detector shutter off
Tek
Trig'd
M Pos: 0.000s
CURSOR
Item
Voltage
Channel
CH4
Delta
202mV
Cursor 1
0.00V
Cursor 2
202mV
196mV
0.54mV
4V
0V
-4V
CH1 5.00V
CH2 50.0V
M 2.50ms
CH1 0.00V
CH4 50.0mV
14-NOV-04 13:44
99.9910Hz

Fig.12

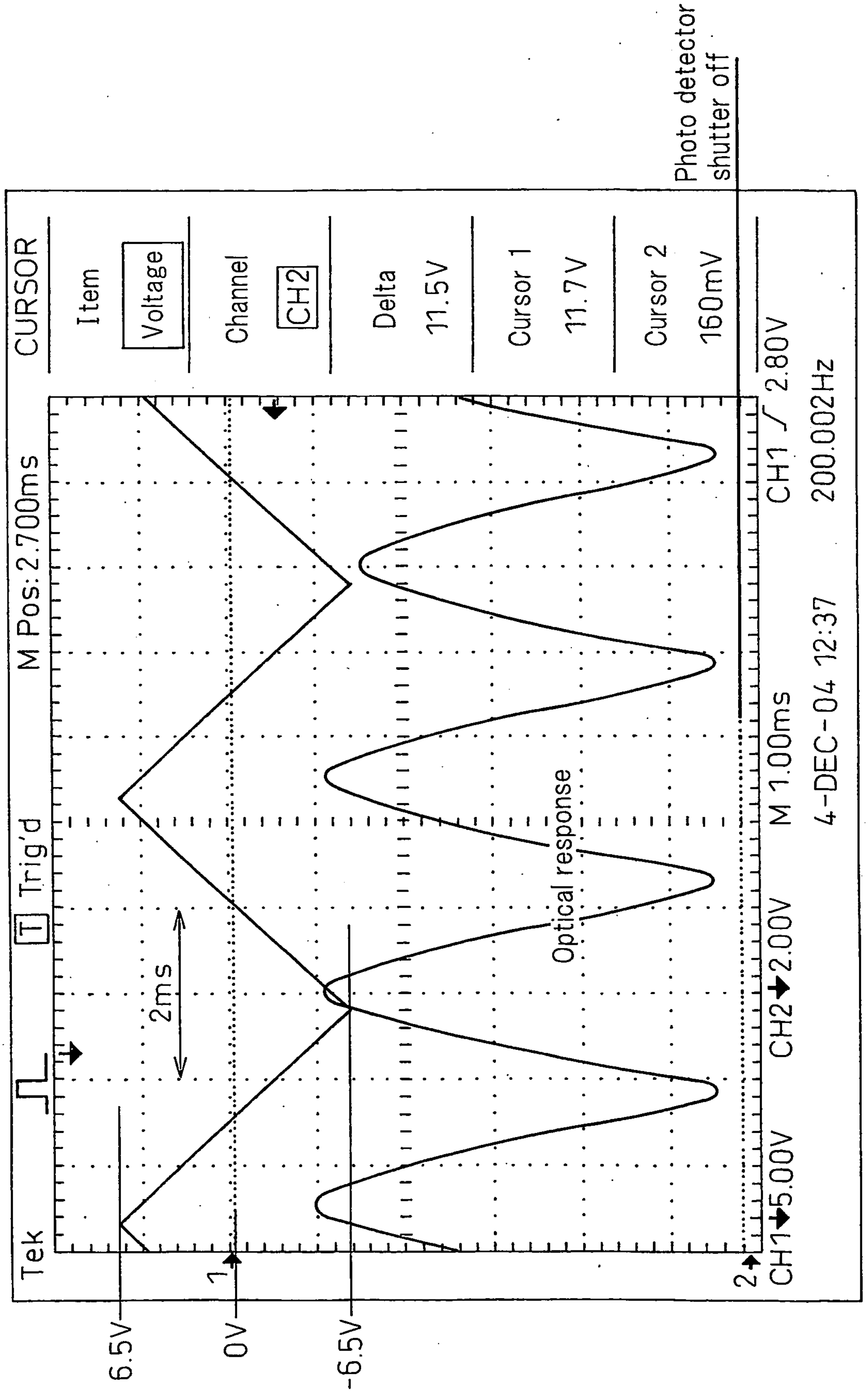
Tek
Trig'd
M Pos: 2.700ms
CURSOR
Item
Voltage
Channel
CH2
Delta
11.5V
Cursor 1
11.7V
Cursor 2
160mV
2ms
Optical response
CH1 5.00V
CH2 2.00V
M 1.00ms
CH1 2.80V
4-DEC-04 12:37
200.002Hz
6.5V
0V
-6.5V
Photo detector
shutter off

Fig.13

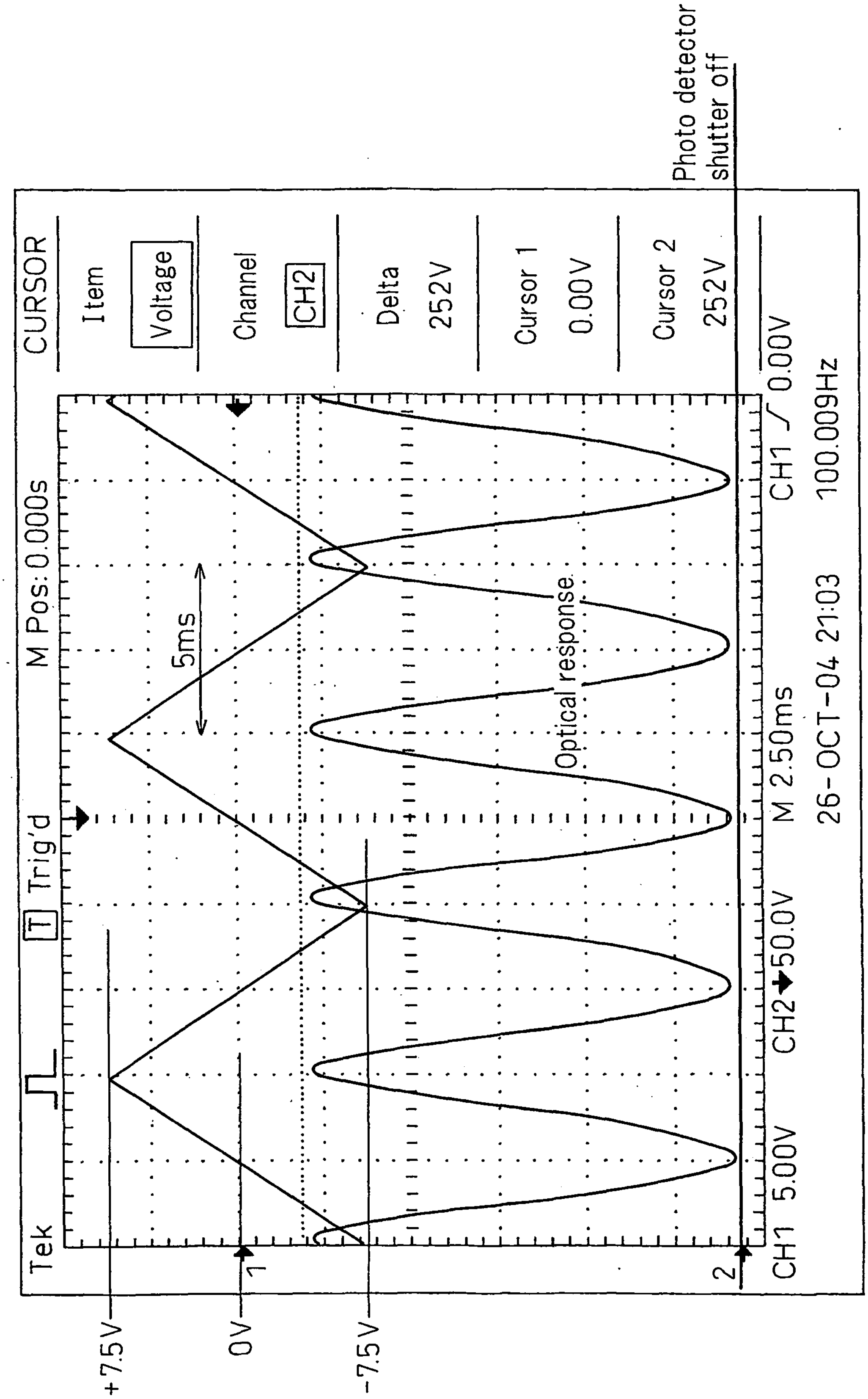
Photo detector shutter off
CURSOR
Item
Voltage
Channel
CH2
Delta
252V
Cursor 1
0.00V
Cursor 2
252V
Tek
Trig'd
M Pos: 0.000s
5ms
Optical response
CH1 5.00V
CH2 50.0V
M 2.50ms
CH1 0.00V
26-OCT-04 21:03
100.009Hz
+7.5V
0V
-7.5V

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040196428 A1
- US 20030076468 A1
- US 20040105066 A1
- US 6727968 B1
- US 5032009 A
- US 3979320 A
- US 3871904 A
- US 20040031950 A1
- GB 1376115 A
- EP 1336636 A1


### Non-patent literature cited in the description


- **T. Kurita.** Consideration on Perceived MTF of Hold Type Display for Moving Image. *International Display Workshop in Kobe,* 1998, 823-826
- **A. Mochizuki.** Ferroelectric Liquid Crystal Display with Si Backplane. *International Workshop on Active Matrix Liquid Crystal Displays in Tokyo,* 1999, 181-184
- **T. Yoshihara.** A Full-color FLC Display Based on Field Sequential Color with TFTs. *INTERNATIONAL WORKSHORP ON ACTIVE MATRIX LIQUID CRYSTAL DISPLAYS IN TOKYO,* 185-188
- **M. Okita.** Liquid crystal fast response technology and its application. *Denshi Gijyuts July, 1998 in Tokyo,* July 1998, 8-12
- **T. Takahashi.** Preliminary Study of Field Sequential Full color Liquid Crystal Display using Polymer Stabilized Ferroelectric Liquid Crystal Display. *Japanese Journal of Applied Physics,* 1999, vol. 38, L534-L536
- **YUE ZHAO et al.** USE OF A GELATOR IN A FERROELECTRIC LIQUID CRYSTAL: PITCH COMPENSATION AND NANOFIBRES. *LIQUID CRYSTALS, TAYLOR AND FRANCIS, ABINGDON,* January 2003, vol. 1 (30), ISSN 0267-8292, 81-86
- **Y. Saitoh ; A. Lien.** An improved Azimuthal Anchoring Energy Measurement Method Using Liquid Crystals with Different Chiralities. *Journal of Japanese Applied Physics,* 2000, vol. 39, 1793
- Liquid Crystal Device Handbook. The Nikkan Kogyo Shimbun, Ltd, 1989
- Liquid Crystal Device Handbook. The Nikkan Kogyo Shimban, Ltd, 1989
- *Molecular Crystals and Liquid Crystals,* 1984, vol. 114, 151